# FASCICULE DE BREVET EUROPEEN

(11) **EP 2 612 767 B1**
(45) Date de publication et mention de la délivrance du brevet: **29.04.2015**
(21) Numéro de dépôt: 13000039.1
(22) Date de dépôt: 04.01.2013
(51) Int. Cl.: B60B 21/06, B60B 21/08, B60B 21/02

(54) **Jante pour roue de cycle et son procédé de fabrication**
Felge für Rad eines Fahrrads, und ihr Herstellungsverfahren
Rim for cycle wheel and method for manufacturing same

(30) Priorité: 04.01.2012 FR 1200028
(43) Date de publication de la demande: 10.07.2013
(73) Titulaire: MAVIC S.A.S., 74370 Metz-Tessy (FR)
(72) Inventeur: Alexandre, Bérenger, 74370 Pringy (FR); Mercat, Jean-Pierre, 74650 Chavanod (FR)
(74) Mandataire: Rambaud, Pascal

(56) Documents cités:
- EP-A1- 0 579 525
- EP-A1- 1 084 868
- EP-A1- 1 491 362
- EP-A1- 1 629 997
- EP-A1- 1 894 744
- EP-A2- 1 428 685
- WO-A2-2005/108120

## Description

La présente invention concerne une jante pour roue de cycle, ainsi qu'un procédé de fabrication d'une telle jante.

De manière classique, une jante pour roue de cycle est de forme annulaire et présente une section radiale en forme de U, avec deux flancs latéraux qui sont globalement perpendiculaires à l'axe de rotation la roue et un pont qui relie les flancs latéraux et qui est tourné en regard de l'axe de rotation de la roue. Dans le cas d'une roue à rayons, les rayons sont généralement fixés au pont de la jante.

Pour fabriquer une jante pour roue de cycle, il est connu de réaliser un profilé rectiligne par extrusion ou filage d'un alliage métallique, par exemple un alliage d'aluminium, puis de cintrer ce profilé pour lui donner une forme annulaire. Les extrémités de la jante sont ensuite raccordées, par exemple par soudage. WO 2005/108120 décrit une jante ainsi obtenue. Ce document décrit également une méthode de réalisation des zones d'accrochage des rayons qui consiste à usiner sélectivement une nervure de façon à ne conserver que quelques projections saillantes.

Il est avantageux d'obtenir une jante légère, pour optimiser les performances du cycliste, tout en conservant une rigidité et une résistance suffisante de manière à éviter la casse.

Le procédé d'extrusion impose des épaisseurs de paroi minimales car la contrainte d'écoulement augmente considérablement lorsque l'épaisseur diminue et lorsque les caractéristiques de l'alliage ainsi que la vitesse de filage augmentent. Ainsi, pour des alliages typiquement utilisés pour la fabrication des jantes, il est très délicat de descendre sous des épaisseurs de 0,85 mm, sous risque de rompre rapidement la filière.

Par ailleurs, le cintrage d'un profilé provoque des déformations plastiques importantes, particulièrement dans les zones éloignées du centre de gravité de la section. Ces déformations plastiques importantes provoquent des dislocations des grains de la matière qui peuvent alors induire un état de surface, dit de « peau d'orange », souvent jugé très disgracieux.

Par ailleurs, des parois latérales trop fines engendrent également lors du cintrage un flambement local des parois du profilé sous des déformations de compression trop élevées.

Pour remédier à ces inconvénients, le document FR-A-2 727 355 propose de fabriquer une jante en extrudant un profilé rectiligne ayant une épaisseur suffisante pour que l'extrusion n'engendre pas de défauts dans la matière. Le profilé est ensuite cintré et son épaisseur lui permet de ne pas s'altérer et de ne pas flamber. Pour réduire le poids de la jante, elle est ensuite plongée dans un bain chimique agressif qui attaque la matière et diminue son épaisseur. Ce procédé de fabrication est relativement laborieux à mettre en oeuvre et l'état de surface devient certes homogène mais assez rugueux.

De manière similaire, le document US-A-6 961 999 propose d'extruder et de cintrer un profilé suffisamment épais pour ne pas engendrer de défauts de fabrication. Les flancs latéraux de la jante sont ensuite usinés pour réduire leur épaisseur et diminuer le poids de la jante. Le document EP-A-0 579 525 propose également d'usiner les flancs latéraux de la jante après l'extrusion et le cintrage du profilé. La réduction du poids de la jante n'est pas optimale car le pont de la jante conserve son épaisseur initiale.

Par ailleurs, il est connu des documents EP-A-1 084 868, EP-A-1 491 362, EP 1 894 744 et EP 1 428 685 d'usiner le profilé après le cintrage, à la fois au niveau du pont et des flancs latéraux de la jante et uniquement sur certaines portions de la circonférence de la jante. L'usinage est relativement long et complexe à mettre en oeuvre car il nécessite l'emploi d'une machine cinq axes. Lorsque l'on souhaite fabriquer plusieurs jantes ayant une géométrie différente, par exemple en ce qui concerne le nombre de rayons, la localisation des zones d'accrochage des rayons ou l'épaisseur de la jante, tous ces procédés nécessitent de modifier les paramètres de fabrication, en particulier l'usinage pour l'enlèvement de matière et/ou l'usinage chimique. Par conséquent, ceci entraine des coûts supplémentaires de développement et ne permet pas de standardiser le procédé de fabrication. Le document EP 0 579 525 divulgue un procédé de fabrication de jante selon le préambule de la revendication 1. C'est à ces inconvénients qu'entend plus particulièrement remédier l'invention en proposant une jante pour roue de cycle et un procédé de fabrication d'une telle jante, permettant de diminuer le poids de la jante tout en obtenant une rigidité optimisée. De plus, la jante conforme à l'invention est rapide à fabriquer et le procédé de fabrication permet d'éviter l'apparition de défauts lors de l'extrusion du profilé et de son cintrage.

La durée de vie des jantes est souvent limitée par l'apparition de fissures dans la zone d'accrochage des rayons. Dès leur apparition, ces fissures se propagent alors très rapidement dans le sens du filage, provoquant très rapidement une rupture du pont. Ce phénomène de fatigue bien connu est, d'une part, dû aux nombreux cycles de chargement que subissent les rayons à chaque tour de roue et, d'autre part, est aussi accéléré par des petits défauts superficiels qui sont généralement des stries longitudinales provoquées par le frottement du métal dans la filière lors de l'opération de filage. L'invention a donc aussi pour but d'optimiser la tenue en fatigue de la jante en renforçant localement l'accroche du rayon, mais aussi en améliorant l'état de surface pour annuler ou retarder l'initiation de fissures de fatigue.

A ces effets, l'invention a pour objet un procédé de fabrication d'une jante pour roue de cycle, la jante présentant, en coupe radiale, une forme en « U » avec deux flancs latéraux et un pont qui relie les flancs et qui est situé en regard d'un axe de rotation de la roue, la jante présentant une surface externe connexe qui est tournée vers l'extérieur de la jante et qui est définie à la fois par le pont et par au moins une partie des flancs. Le procédé de fabrication comprenant :
- une étape d'extrusion, dans laquelle on réalise par extrusion un profilé rectiligne qui comporte deux flancs latéraux et un pont qui relie les flancs et qui est situé en regard d'un axe de rotation de la roue, le profilé présentant une surface externe connexe qui est tournée vers l'extérieur de la jante et qui est définie à la fois par le pont et par au moins une partie des flancs,
- une étape de cintrage, dans laquelle on cintre le profilé pour former un anneau,
- une étape d'assemblage, dans laquelle on solidarise les extrémités de l'anneau formé à partir du profilé,
- une étape de perçage, dans laquelle on réalise des trous de fixation de rayons de la roue par perçage du pont,
- une étape d'usinage, réalisée après l'étape de perçage, dans laquelle sur au moins une zone médiane de la surface externe du pont qui a une largeur transversale mesurée perpendiculairement au plan médian supérieure à 4 mm, est usinée sur au moins 95% de la circonférence de la jante.

Grâce à l'invention, l'étape d'usinage sert à la fois à ébavurer les pourtours des trous de fixation de rayon, à améliorer l'état de surface au voisinage des trous de fixation et entre ces derniers, et à limiter les risques liés au développement de fissure de fatigue.

De préférence, on usine intégralement la surface externe du pont sur toute la circonférence.

Dans un mode de réalisation préféré de l'invention, on usine, dans un plan radial, sur au moins une partie de la circonférence l'intégralité de la surface externe de la jante.

Dans les différents modes de réalisation qui seront décrits ci-dessous, l'usinage se fera sur toute la circonférence de la jante. Dans d'autres modes de réalisation non détaillés ci-après qui sont également prévus dans le cadre de l'invention, usinage est réalisé sur la quasi-totalité de la circonférence. Dans ce cas, au moins 95%, voire 97% de la circonférence est usinée. On pourra, par exemple choisir cette configuration si on désire réaliser un balourd pour contrebalancer le poids de l'éclisse d'une jante manchonnée et/ou de la valve de gonflage. De préférence, même dans le cas où seulement 95% de circonférence de la jante est usinée, on veillera à ce que toutes les zones d'attache de rayon le soient.

Grâce à l'invention, à la fois les flancs latéraux et le pont de la jante sont usinés simultanément. Ainsi, la fabrication est plus aisée et plus rapide, et le poids de la jante est réduit. De plus, l'usinage améliore l'état de surface du pont et des flancs en supprimant les défauts résultant du filage du profilé ou du cintrage, ce qui améliore la tenue en fatigue. En outre, l'aérodynamisme de la jante est optimisé car l'usinage simultané du pont et des flancs permet d'éviter la formation d'arêtes entre le pont et les flancs.

Ce procédé de fabrication est standardisé, c'est-à-dire qu'il est possible de fabriquer aisément des jantes de géométrie différente à partir d'un même profilé, sans avoir besoin de modifier l'outillage prévu pour l'extrusion, le cintrage et l'usinage. Par exemple, en vue de la fabrication d'une gamme de jantes, il est envisageable de fabriquer différentes jantes de roues avant et arrière à partir d'un même profilé et avec les mêmes outils d'usinage.

Les fissures de fatigue apparaissent généralement au niveau du pont de la jante, autour des zones d'accrochage des rayons. S'il s'avère qu'une jante fabriquée par un tel procédé n'est pas assez robuste, il est possible d'augmenter aisément l'épaisseur du pont de la jante, au moins au niveau de certaines zones de la circonférence de la jante, en conservant l'outillage initial et en faisant varier les paramètres géométriques de l'usinage. Par exemple, si la jante est usinée avec une fraise à profil concave, il suffit de décaler la fraise vers l'axe de rotation de la jante pour augmenter l'épaisseur de ses parois. Ainsi, les coûts de développement de la jante sont réduits.

Selon des aspects avantageux mais non obligatoires de l'invention, un tel procédé peut incorporer une ou plusieurs des caractéristiques suivantes, prises dans toutes combinaisons techniquement admissible :
- L'étape d'usinage est réalisée au moyen d'une fraise présentant un profil concave et permettant d'usiner simultanément, dans un plan radial, le pont et au moins une partie des flancs.
- La surface externe de la jante comprend la totalité de la surface externe des flancs.
- La jante est divisée en plusieurs zones qui fractionnent la circonférence de la jante en secteurs angulaires, les zones comprenant :
- des zones de transmission situées autour des zones d'attache des rayons de la roue et
- des zones intermédiaires situées entre les zones de transmission,
Au niveau des zones de transmission, l'épaisseur du pont, mesurée dans un plan médian de la jante, est égale à une épaisseur maximale. Au niveau des zones intermédiaires, l'épaisseur du pont, mesurée dans un plan médian de la jante au terme de l'étape d'usinage, est égale à une épaisseur minimale inférieure à l'épaisseur maximale. Lors de l'étape d'usinage, on usine la surface externe de la jante au moins au niveau des zones intermédiaires.
- Les zones comprennent en outre des zones de transition situées chacune entre une zone de transmission et une zone intermédiaire. Au niveau des zones de transition, l'épaisseur du pont est égale à une épaisseur intermédiaire, comprise entre et variant progressivement entre l'épaisseur minimale et l'épaisseur maximale du pont. Lors de l'étape d'usinage, on usine la surface externe de la jante au moins au niveau des zones de transition.
- Lors de l'étape d'usinage, on usine l'intégralité de la surface externe de la jante sur toute la circonférence de la jante.
- La surface externe comprend la totalité des flancs et dans l'étape d'usinage, sur au moins une partie de la circonférence de la jante, on usine, dans un plan radial, la totalité de la surface externe de la jante.
- Au terme de l'étape d'extrusion, un rayon de courbure du pont du profilé, mesuré dans le plan radial de la jante, est supérieur à 20 mm. Au terme de l'étape d'usinage, un rayon de courbure du pont de la jante est inférieur à 15 mm, de préférence inférieur à 10 mm.
- Au terme de l'étape d'extrusion, une épaisseur du pont du profilé est supérieure à 1,6 mm, de préférence supérieure à 1,9 mm.
- Un rapport ayant, comme dénominateur une épaisseur du pont du profilé, mesurée au terme de l'étape d'extrusion, et, comme numérateur, une épaisseur du pont de la jante, mesurée au terme de l'étape d'usinage, est inférieur à 90 %.
- Lors de l'étape de perçage, on réalise simultanément des trous et des cheminées de fixation des rayons par fluoperçage du pont, sans découpage.
- Une épaisseur minimale d'usinage, égale à la différence entre, d'une part, l'épaisseur du pont du profilé, mesurée au terme de l'étape d'extrusion, et d'autre part, l'épaisseur minimale du pont de la jante, mesurée au terme de l'étape d'usinage et considérée sur toute la circonférence de la jante, est supérieure à 0,1 mm, de préférence supérieure à 0,3 mm.
- Lors de l'étape de perçage, on réalise simultanément des trous et des cheminées de fixation des rayons par fluoperçage du pont, sans découpage.

L'invention concerne également une jante pour roue de cycle fabriquée au moyen d'un tel procédé.

Selon des aspects avantageux mais non obligatoires de l'invention, un tel procédé de fabrication peut incorporer une ou plusieurs des caractéristiques suivantes, prises dans toute combinaison techniquement admissible :
- L'épaisseur maximale du pont est supérieure à 1,6 mm, de préférence supérieure à 2 mm.
- L'épaisseur minimale du pont est inférieure à 0,65 mm, de préférence inférieure à 0,8 mm.
- Dans une section radiale de la jante, un rayon de courbure du pont est inférieur à 15 mm, de préférence inférieur à 10 mm.
- Lee pont comporte des cheminées cylindriques taraudées intérieurement pour la fixation de rayons de la roue et les cheminées sont formées d'une seule pièce avec la jante.
- Les flancs définissent chacun une surface de freinage plane, prévue pour coopérer avec un patin de freinage. Une hauteur d'au moins une surface de freinage, mesurée dans le plan radial, est plus grande au niveau des zones de transmission qu'au niveau des zones intermédiaires.

L'invention sera mieux comprise à la lecture de la description qui va suivre d'une jante pour roue de cycle et d'un procédé de fabrication d'une telle jante conformes à son principe, donnée uniquement à titre d'exemple et faite en référence aux dessins annexés dans lesquels :
- La figure 1 est une vue en perspective d'une roue de cycle représentée sans son pneumatique et comprenant une jante conforme à l'invention ;
- La figure 2 est une vue latérale du détail Il à la figure 1 ;
- Les figures 3, 4 et 5 sont des sections radiales selon les lignes III-III, IV-IV et V-V à la figure 2, le rayon étant omis à la figure 5 pour la clarté du dessin ;
- La figure 6 est une section transversale d'un profilé à partir duquel la jante est fabriquée ;
- La figure 7 est une vue en perspective d'un élément de frein à patin non usé, utilisé pour freiner la roue de la figure 1 et représenté en appui contre la jante, qui est représentée partiellement ;
- La figure 8 est une section selon le plan P8 à la figure 7 ;
- La figure 9 est une vue semblable à la figure 7 d'un élément de frein à patin usé ;
- La figure 10 est un schéma-bloc d'un procédé de fabrication de la jante ;
- La figure 11 est une vue semblable à la figure 2 d'une jante conforme à un deuxième mode de réalisation de l'invention ;
- Les figures 12 à 15 sont des sections selon les lignes XII-XII, XIII-XIII, XIV-XIV et XV-XV à la figure 11, les rayons étant omis aux figures 12, 13 et 15 pour la clarté du dessin ;
- La figure 16 est une représentation schématique montrant deux sections d'une jante conforme à un troisième mode de réalisation de l'invention, superposées avec une section d'un profilé à partir duquel est fabriquée cette jante ;
- La figure 17 est une vue en perspective d'une fraise utilisée lors de la fabrication de la jante de la figure 1 ;
- La figure 18 est une section transversale d'un profilé à partir duquel est fabriquée une jante conforme à un quatrième mode de réalisation de l'invention ;
- La figure 19 est une section radiale de la jante conforme au quatrième mode de réalisation de l'invention ;
- La figure 20 est une représentation schématique montrant trois sections de la jante de la figure 19, superposées avec la section du profilé de la figure 18 ; et
- La figure 21 est une vue à plus grande échelle du détail XXI à la figure 20.

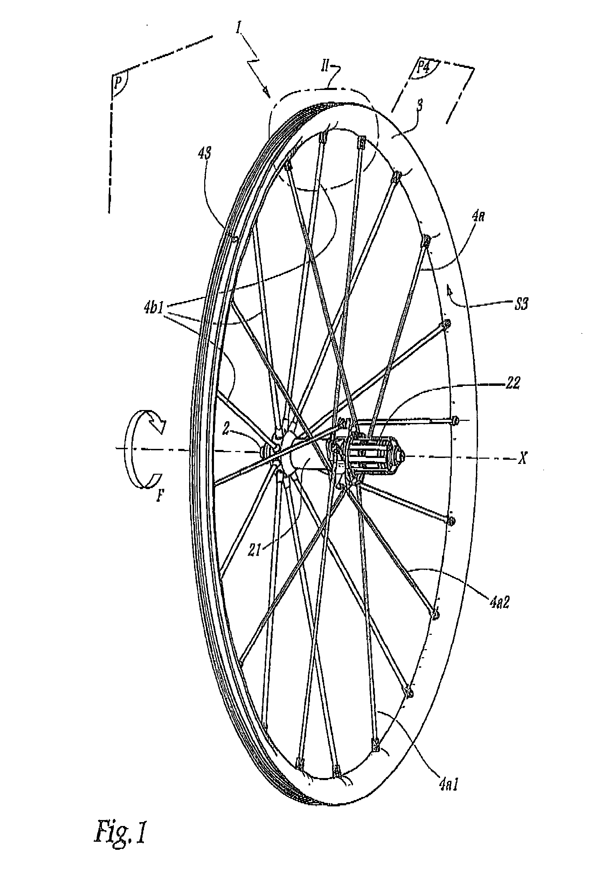

La figure 1 montre une roue arrière 1 de bicyclette, représentée sans son pneumatique. La roue 1 comprend deux nappes 4a et 4b de rayons 4a1, 4a2 et 4b1 montées sur une jante 3. Les nappes 4a et 4b sont assemblées à un moyeu 2 de la roue 1, qui comprend un corps de moyeu 21 s'étendant le long d'un axe de rotation X de la roue 1. Un mécanisme de roue libre 22 est raccordé à l'extrémité du corps de moyeu 21 qui supporte la nappe 4a, et l'autre extrémité du corps de moyeu 21 supporte la nappe 4b. Le mécanisme de roue libre 22 est prévu pour être assemblé avec une cassette de pignons, non représentée.

Lorsqu'un cycliste pédale dans un sens d'avance, il entraine en rotation la roue 1 autour de l'axe de rotation X, par l'intermédiaire de la cassette de pignons et du mécanisme de roue libre 22, dans un sens représenté par la flèche F à la figure 1.

La nappe 4a comporte des rayons tracteurs 4a2, qui tirent sur la jante 3 lorsque le cycliste pédale, et des rayons non tracteurs 4a1 ou rayons pousseurs, qui ont tendance à se détendre lorsque le cycliste pédale. La nappe 4a est menante, ses rayons 4a1 et 4a2 sont accrochés du côté du corps de moyeu 21 qui porte le mécanisme de roue libre 22 et qui reçoit le couple moteur résultant de l'effort de pédalage du cycliste. Au contraire, la nappe 4b est menée.

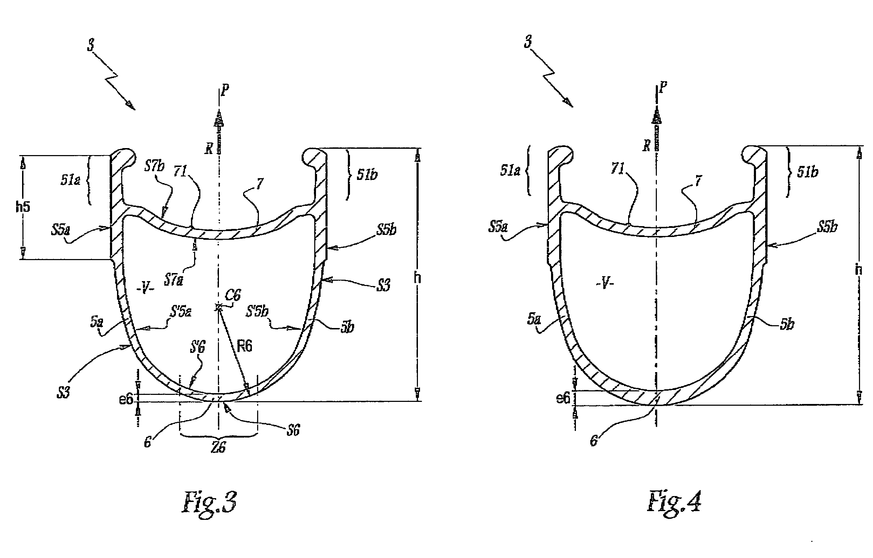

Comme le montrent les figures 3 à 5, la section radiale de la jante 3, considérée dans un plan radial P4 de la jante 3 passant par l'axe X et s'étendant selon une direction radiale de la jante 3, est en forme de caisson creux, ou en forme de « U » avec une paroi transversale 7 qui relle les deux branches verticales du « U ». Par section radiale, on entend une section dans un plan P4 qui passe par l'axe X, orienté selon une direction radiale. La jante 3 comporte deux flancs 5a et 5b latéraux et un pont 6 de forme arrondie qui relie entre eux les flancs 5a et 5b et qui forme la partie courbe de la section en « U ». Le pont 6 est situé du côté de l'axe de rotation X et la paroi transversale 7 est située du côté du pneumatique. La jante 3 délimite ainsi un volume intérieur V. Le côté convexe du pont 6 est orienté en regard de l'axe X et le côté concave du pont 6 est orienté du côté du pneumatique. La paroi transversale 7 est globalement perpendiculaire aux flancs 5a et 5b et relie entre eux les flancs 5a et 5b, à l'opposé du pont 6. Du côté opposé au pont 6, les flancs 5a et 5b sont pourvus chacun d'un crochet 51a et 51 b en forme de L, prévu pour fixer un pneumatique non représenté à la jante 3. Les crochets 51a et 51b dépassent à l'extérieur du caisson formé par la jante 3. La forme en caisson de la jante 3 est délimitée par les flancs 5a et 5b, le pont 6 et la paroi transversale 7.

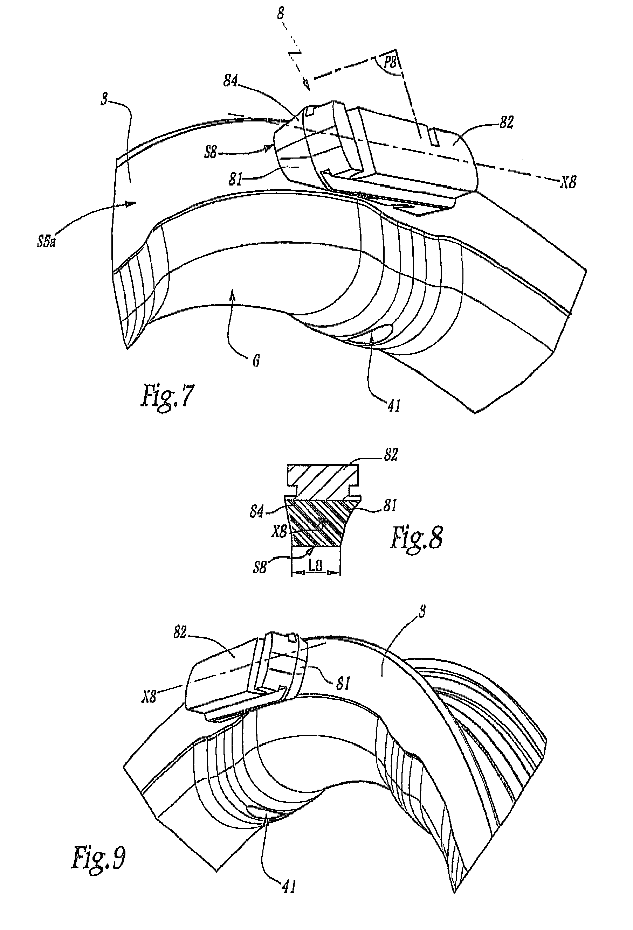

La jante 3 est prévue pour être utilisée avec un système de freinage à patins qui comprend deux éléments de freinage 8, dont l'un est représenté à la figure 7, montés sur un étrier fixé au cadre du cycle. Chaque élément de freinage 8 comprend un patin 81, monté sur un élément de support 82 et s'étendant longitudinalement selon un axe X8 qui, en service, est localement tangent à une direction circonférentielle de la jante 3. En d'autres termes, en service, l'axe X8 s'étend selon une direction orthoradiale de la jante 3. Chaque patin présente une largeur L8 décroissante, entre la partie 84 qui est fixée au support 82 et la surface de frottement en forme de tronçon d'anneau S8 qui entre en contact avec des surfaces de freinage S5a et S5b de la jante 3, lors du freinage la largeur L8 est mesurée perpendiculairement à l'axe X8 et parallèlement à la surface S8.

Les surfaces de freinage S5a et S5b sont définies à l'extérieur du volume V par les crochets 51a et 51b et une partie des flancs 5a et 5b attenante aux crochets 51a et 51b. Les surfaces S5a et S5b sont planes et sont perpendiculaires à l'axe X.

On note P, un plan médian de la roue 1, perpendiculaire à l'axe X. Le plan médian P passe entre les flancs 5a et 5b et entre les crochets 51a et 51b, à égale distance de ceux-ci. Ainsi, les flancs 5a et 5b sont situés de part et d'autre du plan médian P.

On note h5 la hauteur des surfaces de freinage S5a et S5b, mesurée parallèlement au plan P, selon une direction radiale R de la roue 1.

Les extrémités périphériques des rayons a1, 4a2 et 4b1 sont équipées de têtes 40 filetées, fixées au pont 6 de la jante 3. Le pont 6 comporte des trous 41 dont les bords sont prolongés vers l'intérieur du volume intérieur V par une cheminée 42 de forme globalement cylindrique. Les cheminées 42 sont taraudées intérieurement pour visser les têtes 40.

Un trou de valve 43 est réalisé à travers le pont 6 et la paroi transversale 7. Lorsqu'un pneumatique est monté sur la jante 3, la valve du pneumatique est insérée dans le trou de valve 43 et dépasse à l'extérieur de la jante 3.

La paroi transversale 7 est pourvue d'un détrompeur 71 décalé par rapport au plan P. Le détrompeur 71 permet de repérer le côté droit et le côté gauche de la jante 3, pour faciliter le montage des rayons 4a1, 4a2 et 4b1.

On note e6 l'épaisseur du pont 6, mesurée selon la direction radiale R, dans le plan P et perpendiculairement à l'axe X.

La jante 3 est divisée en plusieurs zones Z1, Z2, Z3a1, Z3a2 et Z3b1, qui fractionnent la circonférence de la jante 3 en plusieurs secteurs angulaires. Les zones de transmission Z3a1, Z3a2 et Z3b1 sont situées respectivement autour des trous 41 où sont montés les rayons 4a1, 4a2 et 4b1. Deux zones de transition Z2 sont situées de part et d'autre de chaque zone de transmission Z3a1, Z3a2 et Z3b1. Les zones intermédiaires Z1 sont situées entre les zones de transition Z2 et sont plus éloignées des trous 41 que les zones Z2, Z3a1, Z3a2 et Z3b1. Ainsi, chaque zone de transition Z2 est située entre une zone de transmission Z3a1, Z3a2 et Z3b1 et une zone intermédiaire Z1.

En service, les zones de transmission Z3a1, Z3a2 et Z3b1 sont soumises à des contraintes mécaniques d'intensité relativement élevée car c'est à ce niveau que l'effort fourni par le cycliste est transmis à la jante 3. Les zones de transition Z2 sont soumises à des contraintes mécaniques d'intensité moyenne car elles sont adjacentes aux zones de transmission Z3a1, Z3a2 et Z3b1. Les zones intermédiaires Z1 sont soumises à des contraintes mécaniques relativement faibles car elles sont éloignées des zones de transmission Z3a1, Z3a2 et Z3b1.

Plus l'épaisseur e6 du pont 6 est importante et plus la jante 3 est solide et lourde. Au contraire, plus l'épaisseur e6 du pont 6 est faible et plus la jante 3 est fragile et légère. Pour avoir une jante 3 avec une résistance mécanique satisfaisante et une masse réduite, l'épaisseur e6 est adaptée en fonction des contraintes mécaniques encaissées par les différentes zones Z1, Z2, Z3a1, Z3a2 ou Z3b1.

Au niveau des zones intermédiaires Z1, l'épaisseur e6 est égale à une épaisseur minimale e6min. L'épaisseur e6min est inférieure à 0,8 mm, de préférence inférieure à 0,65 mm.

Au niveau des zones de transmission Z3a1, Z3a2 et Z3b1, l'épaisseur e6 est égale à une épaisseur maximale e6max supérieure à l'épaisseur minimale e6min. L'épaisseur e6max est supérieure à 1,6 mm, de préférence supérieure à 2 mm.

Par ailleurs, l'intensité des efforts mécaniques transmis à la jante 3 par les rayons 4a1, 4a2 et 4b1 n'est pas la même selon que le rayon 4a1, 4a2 ou 4b1 fait partie d'une nappe 4a ou 4b menante ou menée, et selon que le rayon est un rayon tracteur 4a2 ou non tracteur 4a1. De plus, l'intensité des efforts transmis n'est pas la même pour la roue 1, qui est la roue motrice du cycle, et pour la roue avant du cycle, non représentée.

Ainsi, l'épaisseur e6max n'est pas la même pour chaque zone de transmission Z3a1, Z3a2 et Z3b1. L'épaisseur e6max des zones de transmission Z3a1 où sont accrochés les rayons tracteurs 4a2 est supérieure à l'épaisseur e6max des zones de transmission Z3a2 où sont accrochés les rayons non-tracteurs 4a1. L'épaisseur e6max des zones de transmission Z3b1 où est accrochée la nappe 4a qui est menante est supérieure à l'épaisseur e6max des zones de transmission Z3a2 où est accrochée la nappe 4b qui est menée. L'épaisseur e6 de la roue motrice 1 du cycle est de préférence supérieure ou égale à l'épaisseur e6 de la roue avant du cycle.

De manière optionnelle, les flancs 5a et 5b peuvent être localement plus épais au niveau des zones de transmission Z3a1, Z3a2, Z3b1 et au niveau des zones de liaison Z2 qu'au niveau des zones intermédiaires Z1, pour réduire les risques de rupture de la jante 3.

Au niveau des zones de transition Z2, l'épaisseur e6 est égale à une épaisseur intermédiaire e6int comprise entre l'épaisseur minimale e6min et l'épaisseur maximale e6max. Pour chaque zone de transition Z2, l'épaisseur intermédiaire e6int varie de préférence de manière progressive le long de la circonférence de la jante 3, entre la zone intermédiaire Z1 et la zone de transmission Z3a1, Z3a2 et Z3b1 adjacentes la à zone de transition Z2.

On note S3, une surface externe de la jante 3, située à l'extérieur du volume intérieur V et définie par le pont 6 et par la partie des flancs 5a et 5b située entre le pont 6 et les surfaces de freinage S5a et S5b. La surface externe S3 est connexe, autrement dit d'un seul tenant. Dans le plan radial P4 de la jante 3, on note R6, le rayon de courbure d'une surface externe S6 du pont 6, qui est tournée en regard de l'axe de rotation X et qui est à l'extérieur du volume V. On note C6, le centre de courbure de la surface externe S6. Le pont 6 n'est pas exactement en forme d'arc de cercle. Par conséquent, le rayon de courbure R6 est variable. Le rayon de courbure R6 est mesuré sur une zone médiane Z6 du pont 6 qui a une largeur transversale, mesurée perpendiculairement au plan P, égale à 10 mm.

Dans la zone médiane Z6, le rayon de courbure R6 est inférieur à 15 mm, de préférence inférieur à 10 mm. Par exemple, le rayon R6 est égal à 8 mm. Un grand rayon de courbure R6 dégraderait l'aérodynamisme de la jante 3. Le faible rayon de courbure R6 de la jante 3 lui confère un aérodynamisme optimisé.

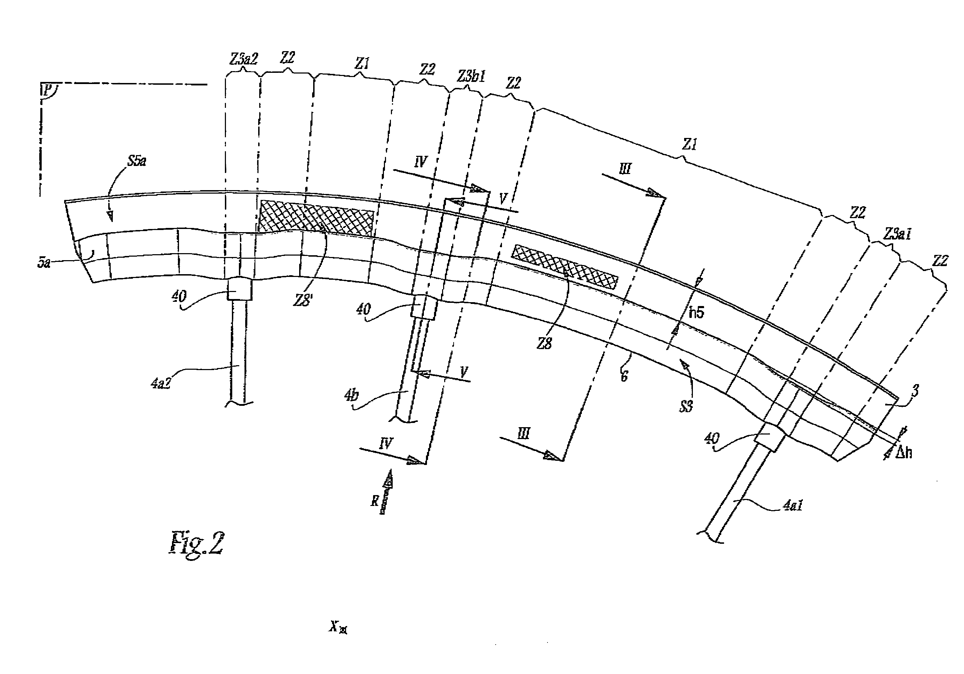

Comme le montre la figure 2, la hauteur h5 des surfaces de freinage S5a et S5b est plus grande au niveau des zones de transmission Z3a1, Z3a2 et Z3b1 qu'au niveau des zones intermédiaires Z1. Comme expliqué ci-dessous, cela constitue un témoin sonore d'usure des patins 81.

La zone rectangulaire Z8 de la jante 3 représentée à la figure 2 représente la zone de contact entre la surface S8 du patin 81 et la jante 3 lors du freinage, lorsque le patin 81 n'est pas ou peu usé. Cette configuration est représentée à la figure 7. Sur toute la circonférence de la jante 3, le contact entre le patin 81 et la jante 3 se fait uniquement au niveau de la surface de freinage S5a ou S5b, et la surface de frottement S8 du patin 81 ne recouvre pas la surface externe S3 de la jante 3, qui est en retrait vers le plan médian P par rapport à chaque surface de freinage S5a et S5b.

La zone Z8' de la jante 3 représente la zone de contact entre la surface de frottement S8 du patin 81 et la jante 3 lors du freinage, lorsque le patin 81 est usé. Cette configuration est représentée à la figure 9. Etant donné la forme évasée du patin 81, la surface de la zone Z8' est plus grande que la surface de la zone Z8. Lorsqu'un patin 81 est usé et qu'il est en contact avec la jante 3 au dessus de la surface externe S3, au niveau des zones intermédiaires Z1, une partie de la surface de frottement S8 du patin 81 déborde au niveau des surfaces de freinage S5a et S5b. Au niveau des zones de transmission Z3a1, Z3a2 et Z3b1, le contact entre le patin 81 et la jante 3 se fait entièrement ou presque entièrement sur les surfaces de freinage S5a et S5b. Ainsi, lorsque le patin 81 est usé, grâce à la différence de hauteur Δh entre les zones intermédiaires Z1 et les zones de transmission Z3a1, Z3a2 et Z3b1, la partie de la surface de frottement S8 des patins 81 qui, lors du freinage, est en contact avec la jante 3 au niveau des zones de transmission Z3a1, Z3a2 et Z3b1, est plus grande qu'au niveau des zones intermédiaires Z1.

Lors du freinage, la roue 1 tourne et le patin 81 frotte sur les surfaces de freinage S5a et S5b. Lorsque le patin 81 n'est pas usé, le son produit par ce frottement est constant tout au long du freinage. Au contraire, lorsque le patin 81 est usé, le son produit par le frottement est modifié lorsque le patin 81 frotte au niveau des zones de transmission Z3a1, Z3a2 et Z3b1. Cette différence de son permet à l'utilisateur de savoir, lors du freinage, si le patin 81 est usé. En effet, grâce à la différence de hauteur Δh, le son produit par le frottement des patins 81 devient discontinu en cas d'usure des patins 81, et lorsque l'utilisateur entend un son saccadé, il est alerté de l'usure des patins 81.

Du côté du patin 81 tourné vers l'axe de rotation X et à proximité du support 82, la largeur L8 du patin 81 décroît de manière plus prononcée que du côté de la surface de frottement S8. Grâce à la variation prononcée de la largeur L8 à proximité du support 82, dans la zone d'usure maximale du patin 81, le signal sonore apparaît assez brutalement, ce qui facilite sa détection. Cette variation prononcée de la largeur L8 est réalisée du côté de l'axe de rotation X car cette zone frotte sur la partie des surfaces de freinage S5a et S5b qui présentent les différences de hauteur Ah utiles pour la détection de l'usure. En variante, le patin 81 est symétrique et sa largeur L8 décroit de manière plus prononcée, à proximité du support 82, à la fois du côté du patin 82 tourné vers l'axe de rotation X et du côté du patin 82 tourné vers le pneumatique.

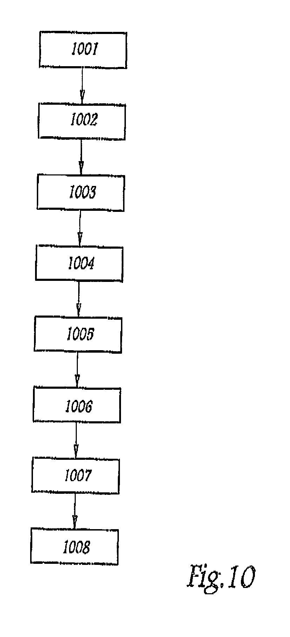

La suite de la description concerne un procédé de fabrication de la jante 3, représenté à la figure 10, qui comprend des étapes 1001 à 1008 se déroulant successivement.

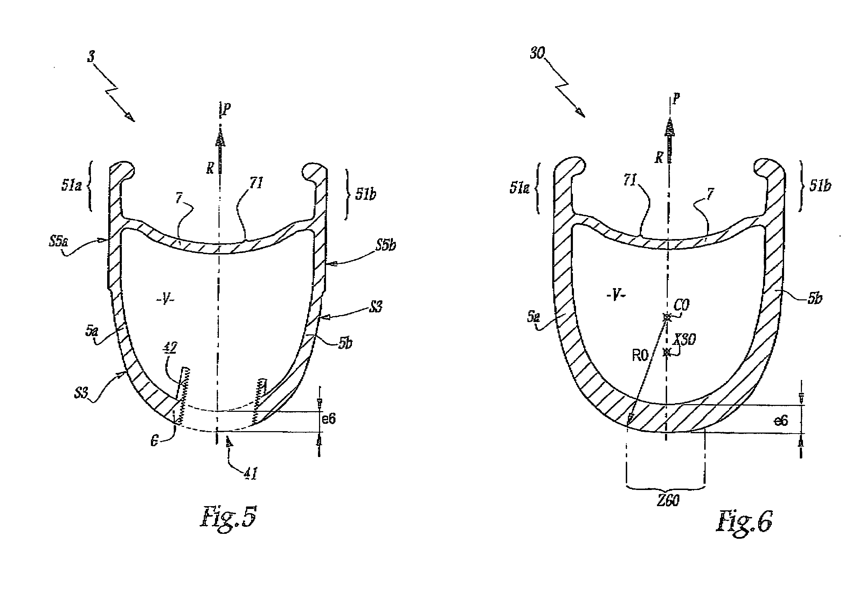

Dans une étape d'extrusion 1001, on réalise par extrusion ou filage d'un alliage métallique, par exemple un alliage d'aluminium, un profilé 30 rectiligne, dont la section transversale est représentée à la figure 6. La section du profilé 30 est similaire à celle de la jante 3 et comporte deux flancs 5a et 5b et un pont 6 de forme arrondie qui relie les flancs 5a et 5b. Une paroi transversale 7, globalement perpendiculaire aux flancs 5a et 5b, relie entre eux les flancs 5a et 5b. Du côté opposé au pont 6, les flancs 5a et 5b sont pourvus chacun d'un crochet 51 a et 51b en forme de L.

On note e60 l'épaisseur du pont 6 du profilé 30, mesurée selon la direction radiale R dans le plan médian P, perpendiculairement à l'axe longitudinal X30 du profilé.

On note C0 le centre de courbure et R0 le rayon de courbure de la surface externe S60 du pont 6 du profilé 30, mesurée sur une zone Z60 de 10 mm de large. Le rayon R0 est supérieur au rayon R6 de la jante 3. Le rayon R0 est supérieur à 20 mm.

Dans une étape de cintrage 1002, on cintre la portion du profilé 30 pour former plusieurs spires hélicoïdales circulaires, par exemple au moyen d'une cintreuse à galets. Par exemple, on forme trois spires à partir du profilé 30 qui a alors une longueur qui équivaut à environ trois fois la circonférence de la jante 3.

Dans une étape de découpe 1003, on sectionne les spires pour obtenir plusieurs anneaux ayant le même périmètre que la jante 3.

Pour éviter l'apparition de défauts dans la matière du profilé 30 lors de l'extrusion, l'épaisseur des parois du profilé 30 doit être suffisamment importante. De plus, lorsque les parois du profilé 30 sont trop fines, le profilé 30 risque de flamber lors du cintrage et des plissements indésirables se forment au niveau du pont 6 lors du cintrage. Pour empêcher ces phénomènes, l'épaisseur e60 du pont 6 du profilé 30 est supérieure à 1,6 mm, de préférence supérieure à 1,9 mm

Dans une étape d'assemblage 1004, on met bout à bout les extrémités de l'anneau obtenu lors de l'étape de découpe 1003 pour les solidariser, par exemple en les soudant. En alternative, on peut relier les extrémités par manchonnage, en introduisant une pièce rapportée dans le volume intérieur V.

L'épaisseur e60 du profilé 30 est suffisamment grande pour réaliser une soudure ayant une bonne solidité. Si l'épaisseur e60 est trop faible, la soudure devient très délicate à réaliser et risque de se rompre.

Dans une étape de perçage 1005, on réalise le trou de valve 43, par exemple au moyen d'un forêt.

Dans une étape de fluo-perçage 1006, on réalise simultanément les trous 41 et les cheminées 42 de fixation des rayons 4a1, 4a2 et 4b1 par fluo-perçage, c'est-à-dire par perçage sans découpage. Pour ce faire, on utilise un foret de perçage par refoulement opérant sur la surface externe du pont 6, en direction de la paroi transversale 7, de manière à créer les cheminées 42. L'épaisseur initiale e60 du pont 6 est suffisamment grande pour que la cheminée 42 présente une bonne résistance mécanique. En effet, la quantité de matière refoulée est relativement importante, ce qui permet d'obtenir une cheminée suffisamment épaisse. Le trou de valve 43 constitue un repère angulaire pour la réalisation des trous 41 et des cheminées 42, ainsi que pour la réalisation des étapes suivantes.

Le rayon R0 est relativement grand, ce qui empêche le foret de fluo-perçage de glisser sur le pont 6, en particulier lorsqu'on n'utilise pas de canon pour le maintenir.

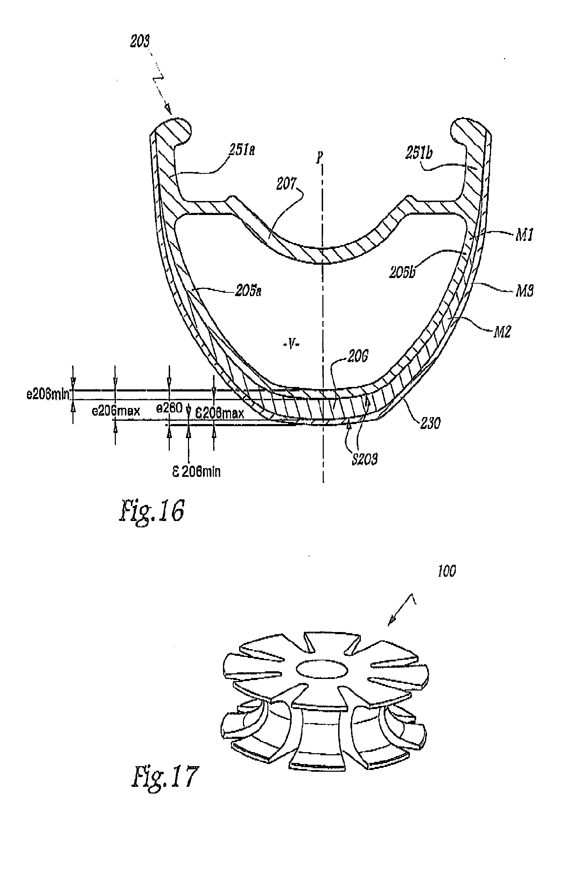

Dans une étape d'usinage 1007, on usine l'intégralité de la surface externe S3 de la jante 3, sur l'ensemble de la périphérie de la jante 3, c'est-à-dire sur 360° et sur chaque zone Z1, Z2, Z3a1, Z3a2 et Z3b1. Plus précisément, dans la plan radial P4, on usine l'intégralité de la surface externe S3, c'est-à-dire à la fois le pont 6 et les flancs 5a et 5b. Par exemple, on peut utiliser une fraise concave 100, représentée à la figure 17, qui présente un profil ou surface coupante S100 globalement en forme de U et qui permet d'usiner en un seul passage l'intégralité de la surface externe S3, à la fois au niveau du pont 6 et des flancs 5a et 5b.

Lors de l'étape d'usinage 1007, la fraise 100 est entrainée en rotation autour de son axe X100, comme indiqué par la flèche F100. L'axe X100 est positionné parallèlement à l'axe X de la jante 3 et la surface S100 est amenée au contact de la surface externe S3 du profilé 30 cintré. La jante 3 et la fraise 100 sont déplacées l'une par rapport à l'autre dans un mouvement circulaire d'axe X, pour que la fraise 100 usine toute la circonférence de la jante 3. Simultanément, la jante 3 et la fraise 100 sont déplacées l'une par rapport à l'autre dans un mouvement de translation effectué selon une direction radiale de la jante 3, ce qui permet de choisir l'épaisseur de matière enlevée au niveau du pont 6 et des flancs 5a et 5b, en vue de l'obtention des épaisseurs e6min, e6max et e6int. En alternative, on peut utiliser une fraise convexe, une fraise boule ou tout autre outil de coupe approprié.

Lors d'une étape complémentaire d'usinage, on usine les surfaces de freinage S5a et S5b, par exemple au moyen d'une fraise deux tailles.

Ainsi, les seules surfaces usinées de la jante 3 sont la surface externe S3 et les surfaces de freinage S5a et S5b. La surface interne S7a de la paroi transversale 7, qui délimite le volume V, ainsi que des surfaces S'6a, S'5a et S'5b du pont 6 et des flancs 5a et 5b qui délimitent le volume V, ne sont pas usinée. De même, la surface externe S7b de la paroi transversale 7, qui est située à l'extérieur du volume V et comporte le détrompeur 71, n'est pas usinée. En d'autres termes, la seule surface de la jante 3 qui est usinée est une surface externe « étendue » qui comprend la surface externe S3 et les surfaces de freinage S5a et S5b.

L'étape d'usinage 1007 permet, dans le cas où les extrémités du profilé 30 sont assemblées par soudage, d'ébavurer le cordon de soudure en créant un état de surface lisse sur toute la circonférence de la jante 3. La soudure n'est alors plus visible, ce qui améliore l'esthétique de la jante 3. Il n'est pas nécessaire d'usiner ultérieurement le joint de soudure, ce qui diminue le nombre d'étapes de fabrication.

Lorsque la jante 3 est usinée avec une fraise concave, la courbure de la surface externe S3 est continue et ne forme pas d'arête. En d'autre terme, la trace de la surface externe S3 dans un plan radial est une courbe dont la dérivée est continue. Par conséquent, l'aérodynamisme de la roue est amélioré.

L'usinage est relativement simple puisqu'il peut être effectué avec une fraiseuse à un axe en faisant tourner la jante 3 autour de l'axe X par rapport à l'outil et en translatant radialement l'outil, ce qui crée simultanément les variations de l'épaisseur e6 des zones Z1, Z2, Z3a1, Z3a2 et Z3b1 et les variations de la hauteur h5. Cela permet de réduire le temps de cycle à une durée inférieure à 1 min. Ainsi, le coût de fabrication de la jante 3 est diminué.

Etant donné que le fluo-perçage est réalisé avant l'usinage, l'ébavurage des trous 41 et 43 se fait automatiquement lors de l'étape d'usinage 1007. Il n'est pas nécessaire d'effectuer une étape supplémentaire d'ébavurage des trous 41 et 43.

Dans une étape de taraudage 1008, on taraude la surface intérieure des cheminées 42 pour former un filetage permettant de visser les têtes 40 des rayons 4a1, 4a2, et 4b1.

Lors de l'usinage, l'épaisseur de matière retirée au niveau du pont 6 est plus ou moins importante en fonction de la zone Z1, Z2, Z3a1, Z3a2 et Z3b1 usinée. Les zones de transmission Z3a1, Z3a2 et Z3b1 conservent une épaisseur e6max relativement importante. Entre les rayons, l'épaisseur e6min des zones intermédiaires Z1 est plus fine. Les zones de transition Z2 présentent une épaisseur e6int qui varie progressivement.

L'épaisseur de matière usinée et la localisation des trous 41 peuvent être adaptées selon plusieurs paramètres, par exemple le nombre de rayons de la roue 1, le poids de l'utilisateur, le type de frein (à patins ou à disques), la pratique (vélo de piste, de cross, VTT ...), et selon le type de rayons. Ainsi, à partir d'un même profilé 30, on peut réaliser une jante adaptée à l'utilisation souhaitée, en modifiant les paramètres de la fabrication, notamment la gamme d'usinage.

Dans une opération d'usinage complémentaire 1009, on usine les surfaces de freinage S5a et S5b, par exemple par tournage ou avec une fraise deux tailles.

On note A, un rapport ayant comme dénominateur, l'épaisseur e60, et comme numérateur, l'épaisseur maximale e6max. Le rapport A est inférieur à 90 %.

Par exemple dans le mode de réalisation mentionné ci-dessus, le rapport A est égal à 87,5 % (2,1/2,4).

En variante, la variation de l'épaisseur e6 entre l'épaisseur minimale e6min et l'épaisseur maximale e6max n'est pas progressive, de sorte que la surface externe S3 de la jante 3 présente, au moins au niveau du pont 6, une arête ou cassure orientée globalement parallèlement à l'axe X. Dans ce cas, au niveau des zones de transition Z2, l'épaisseur intermédiaire e6int présente une variation discontinue le long de la circonférence de la jante 3, entre la zone intermédiaire Z1 et la zone de transmission Z3a1, Z3a2 et Z3b1 adjacentes à la zone de transition Z2.

La jante 3 fait partie d'une roue arrière 1 de cycle, mais l'invention s'applique également aux roues avant. L'invention s'applique également à des jantes ayant un nombre de rayons variable, et de différents types.

En variante, lors de l'étape 1006, on ne réalise pas un fluoperçage mais un perçage avec enlèvement de matière. Dans ce cas, la jante est découpée pour former les trous 41. Pour la fixation des rayons 4a1, 4a2 et 4b sur la jante 3, on peut alors prévoir de fixer dans les trous 41 des douilles. Le fluoperçage, qui est un perçage sans enlèvement de matière, et le perçage par enlèvement de matière sont considérés comme deux modes de réalisations alternatifs d'un perçage.

La fraise 100 représentée à la figure 17 présente un profil concave ayant une courbure continue mais en variante le profil concave présente au moins une arête orientée selon une direction circonférentielle, par exemple entre le pont 6 et un flanc 5a ou 5b.

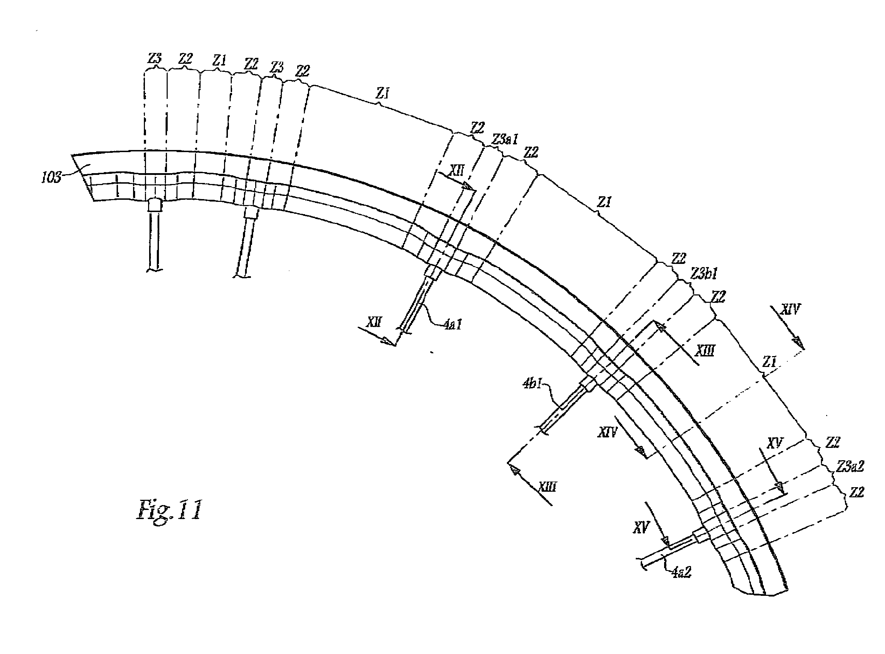

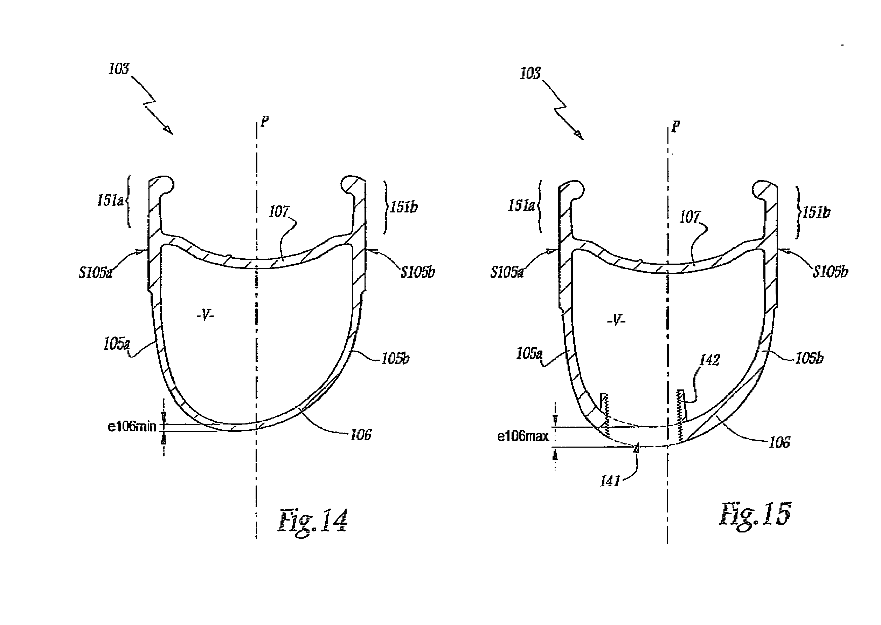

Les figures 11 à 15 montrent une jante 103 conforme à un deuxième mode de réalisation de l'invention. Dans le deuxième mode de réalisation, on ne décrit pas en détail les éléments semblables à ceux du premier mode de réalisation. Les éléments de la jante 103 semblables à ceux de la jante 3 portent les mêmes références numériques, augmentées de 100.

La jante 103 est fabriquée à partir d'un profilé dissymétrique, pour améliorer la répartition des efforts transmis entre la jante 103 et les rayons 4a1, 4a2 et 4b1 qui ne s'étendent pas exactement selon la direction radiale R et qui n'ont pas tous la même orientation par rapport au plan P.

La jante 103 est réalisée au moyen d'un procédé analogue à celui décrit précédemment. Il est possible d'usiner la jante 103 en partant d'un profilé dissymétrique, avec une fraise à profil concave dont l'axe de rotation est incliné par rapport au plan P.

La section transversale de la jante 103 est en forme de caisson creux et comprend deux flancs 105a et 105b et un pont 106. Une paroi transversale 107 relie entre eux les flancs 105a et 105b, à l'opposé du pont 106. Du côté opposé au pont 106, les flancs 105a et 106b sont pourvus chacun d'un crochet 151a et 151b en forme de L, prévu pour fixer un pneumatique non représenté à la jante 103.

Des trous 141 raccordés à des cheminées 142 sont réalisés dans le pont 106.

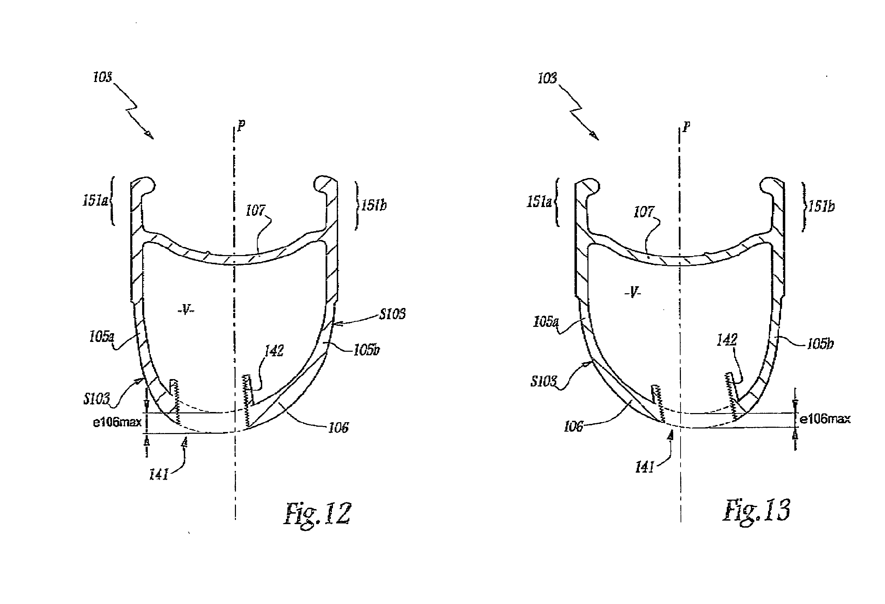

De manière analogue à la jante 3, la jante 103 est divisée en plusieurs zones Z1, Z2, Z3a1, Z3a2 et Z3b1, qui divisent la circonférence de la jante 103 en plusieurs secteurs angulaires. Comme visible aux figures 12 à 15, l'épaisseur e106 du pont 106 varie, en fonction de la zone Z1, Z2, Z3a1, Z3a2 et Z3b1 de la jante 103, de manière analogue à la jante 3 du premier mode de réalisation.

L'épaisseur e106 varie entre une épaisseur maximale e106max, au niveau des zones de transmission Z3a1, Z3a2 et Z3b1 et une épaisseur minimale e106min, au niveau des zones intermédiaires Z1. Au niveau des zones de transition Z2, l'épaisseur e106 est égale à une épaisseur intermédiaire comprise entre l'épaisseur minimale e106min et l'épaisseur maximale e106max.

L'épaisseur maximale e106max des zones de transmission Z3a1 des rayons tracteurs 4a2 est supérieure à l'épaisseur maximale e106max des zones de transmission Z3a2 des rayons non tracteurs 4a1. L'épaisseur e106max des zones de transmission Z3b1 des rayons 4b1 de la nappe menée 4b est inférieure à l'épaisseur e106 max des rayons 4a1 et 4a2 de la nappe menante 4a.

La figure 16 montre une jante 203 conforme à un troisième mode de réalisation de l'invention. Dans le troisième mode de réalisation, on ne décrit pas en détail les éléments semblables à ceux du premier mode de réalisation. Les éléments de la jante 203 semblables à ceux de la jante 3 portent les mêmes références numériques, augmentées de 200.

La jante 203 est réalisée au moyen d'un procédé analogue à celui décrit précédemment et diffère des jantes 3 et 103 en ce qu'elle fait partie d'une roue à freinage à disque.

La section transversale de la jante 203 est en forme de caisson creux et comprend deux flancs 205a et 205b et un pont 206. Une paroi transversale 207 relie entre eux les flancs 205a et 205b, à l'opposé du pont 206. Du côté opposé au pont 206, les flancs 205a et 205b sont pourvus chacun d'un crochet 251a et 251b en forme de L, prévu pour fixer un pneumatique non représenté à la jante 203.

La jante 203 présente une surface externe connexe S203 qui est tournée vers l'extérieur de la jante 203 et qui est définie à la fois par le pont 206 et par la totalité des flancs 205a et 205b, jusqu'à l'extrémité libre des crochets 251a et 251b. En section radiale, la surface externe S203 est Incurvée sur toute sa longueur. Contrairement aux jantes 3 et 103, la surface externe S203 ne présente pas de zone plane prévue pour coopérer avec un patin de freinage.

A la figure 16, une zone hachurée M1 correspond à la section transversale de la jante 203 au niveau des zones intermédiaires Z1 où l'épaisseur e206 du pont 206 est égale à une épaisseur minimale e206min.

La réunion de la zone hachurée M1 avec une zone hachurée M2 correspond à la section transversale de la jante 203, au niveau des zones de transmission Z3a1, Z3a2 ou Z3a3. L'épaisseur maximale e206max est mesurée au niveau des zones de transmission Z3a1, Z3a2 et Z3a3, sur la réunion des zones M1 et M2. La zone hachurée M2 correspond à la surépaisseur de matière entre les zones intermédiaires Z1 et les zones de transmission Z3a1, Z3a2 ou Z3a3 et représente la différence entre l'épaisseur minimale e206min et l'épaisseur maximale e206max.

La réunion des zones hachurée M1 et M2 avec une zone hachurée M3 correspond à la section transversale d'un profilé 230 à partir duquel est fabriquée la jante 203. On note e260 l'épaisseur e206 du pont 206 du profilé 230. L'épaisseur e260 est supérieure à l'épaisseur maximale e206max.

La suite de la description donne des exemples des différentes épaisseurs e206 et e260 de la jante 203 et du profil 230. Ces épaisseurs peuvent également être choisies pour les jantes 3 et 103.

L'épaisseur e260 du pont 206 du profilé 230 non usiné, mesurée au terme de l'étape d'extrusion 1001 et avant l'étape de cintrage 1002, est égale à 2,5 mm.

Au terme de variante, lors de l'étape d'usinage 1007, l'épaisseur maximale e206max, mesurée au niveau des zones de transmission Z3a2 où sont accrochés les rayons tracteurs 4a2, est égale à 2,1 mm. Ces zones de transmission Z3a2 sont les plus sollicitées mécaniquement compte tenu de la fixation des rayons tracteurs 4a2. En considérant la jante 203 à l'issue de sa fabrication, l'épaisseur e206max au niveau des zones de transmission Z3a2 est la plus grande épaisseur e206 du pont 206 sur la globalité on n'usine pas la surface externe 3 ou 103 sur l'intégralité de la circonférence de la jante 203.

L'épaisseur maximale e206max, mesurée au niveau des zones de transmission Z3a1 où sont accrochés les rayons non-tracteurs 4a1, est égale à 1,9 mm.

L'épaisseur maximale e206max, mesurée au niveau des zones de transmission Z3b1 où sont accrochés les rayons 4b1 de la nappe menée 4b, est égale à 1,7 mm. Ces rayons 4b1, situés à l'opposé du mécanisme de roue libre 22 du moyeu 2, ne transmettent pas de couple et sont donc peu sollicités, ce qui explique la valeur relativement faible de l'épaisseur e208max dans les zones Z3b1.

Au niveau des zones intermédiaires Z1, l'épaisseur minimale e206min est égale à 0,65 mm.

Dans cet exemple, la plus grande différence entre les épaisseurs e206max et e206min, considérée au niveau des zones de transmission Z3a2 des rayons tracteurs 4a2, est égale à 1,25 mm.

Soit ε206 l'épaisseur de matière enlevée au pont 206 au terme de l'étape d'usinage 1007, mesurée selon la direction radiale R, dans le plan P et perpendiculairement à l'axe X. L'épaisseur ε206 est égale à la différence entre l'épaisseur e260 du pont 206 profilé 230 et l'épaisseur e206 du pont 206 de la jante 203. L'épaisseur de matière enlevée ε206 varie en fonction de la zone Z3a1, Z3a2, Z3b1, Z2 3 ou Z1 considérée. L'épaisseur maximale de matière enlevée ε206max est atteinte au niveau des zones intermédiaires Z1, où elle est égale à 1,45 mm. L'épaisseur minimale de matière enlevée ε206min est atteinte au niveau des zones de transmission E3a2 des rayons tracteurs 4a2, où elle est égale à 0,2 mm.

Lors de l'étape d'usinage 1007, l'épaisseur minimale de matière enlevée ε206min doit être choisie suffisamment importante pour que l'usinage supprime les aspérités générées lors de l'extrusion et du cintrage du profilé 230. De préférence, l'épaisseur minimale de matière enlevée ε206min est supérieure à 0,1 mm, de préférence encore supérieure à 0,3 mm.

De plus, lors de l'étape d'usinage 1007, la profondeur de passe doit être choisie suffisamment faible pour assurer une parfaite continuité de la coupe et pour garantir un état de surface bien lisse. De préférence, on peut choisir une profondeur de passe inférieure à 0,4 mm, de préférence encore inférieure à 0,2 mm.

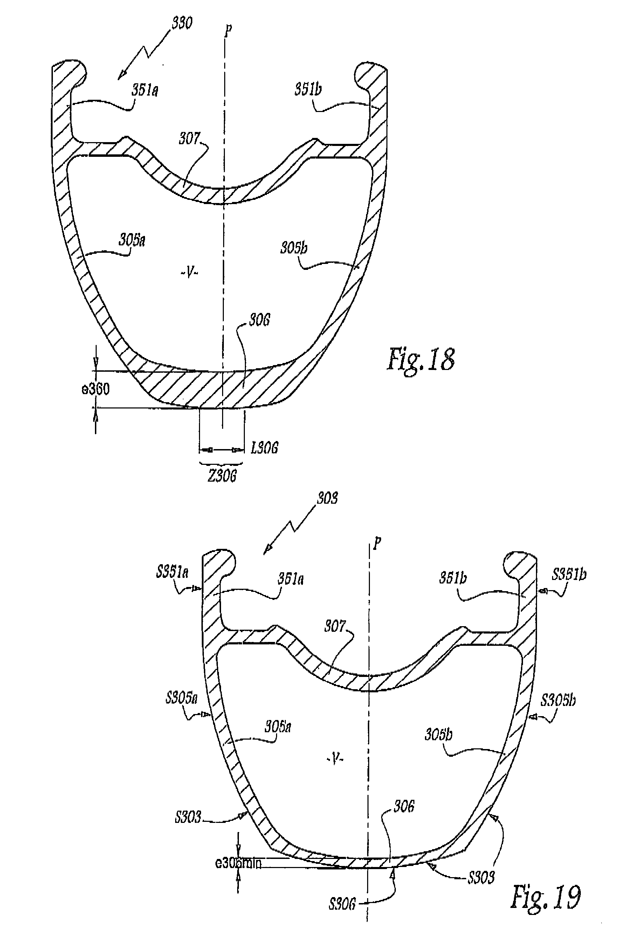

Les figures 18 à 21 montrent une jante 303 et un profilé 330 conforme à un quatrième mode de réalisation de l'invention et faisant partie d'une roue à freinage à disque. Dans le quatrième mode de réalisation, on ne décrit pas en détail les éléments semblables à ceux du premier mode de réalisation. Les éléments de la jante 303 et du profilé 330 semblables à ceux de la jante 3 et du profilé 30 conformes au premier mode de réalisation portent les mêmes références numériques, augmentées de 300.

La section transversale de la jante 303 est en forme de caisson creux et comprend deux flancs latéraux 305a et 305b et un pont 306. Une paroi transversale 307 relie entre eux les flancs 305a et 305b, à l'opposé du pont 306. Du côté opposé au pont 306, les flancs 305a et 305b sont pourvus chacun d'un crochet 351a et 351b en forme de L, prévu pour fixer un pneumatique non représenté à la jante 303.

La jante 303 est réalisée au moyen d'un procédé globalement analogue à celui décrit précédemment et diffère des jantes 3, 103 et 203 en ce que, au cours de l'étape d'usinage 1007,, mais uniquement le pont 306 de la jante 303 est usiné. Ainsi, les flancs latéraux 305a et 305b ne sont pas usinés.

La jante 303 présente sur une surface externe connexe S303 qui est tournée vers l'extérieur de la jante 303 et qui est définie à la fois par le pont 303 et par la totalité des flancs 351 a et 351 b, jusqu'à l'extrémité libre des crochets 251 a et 351 b.

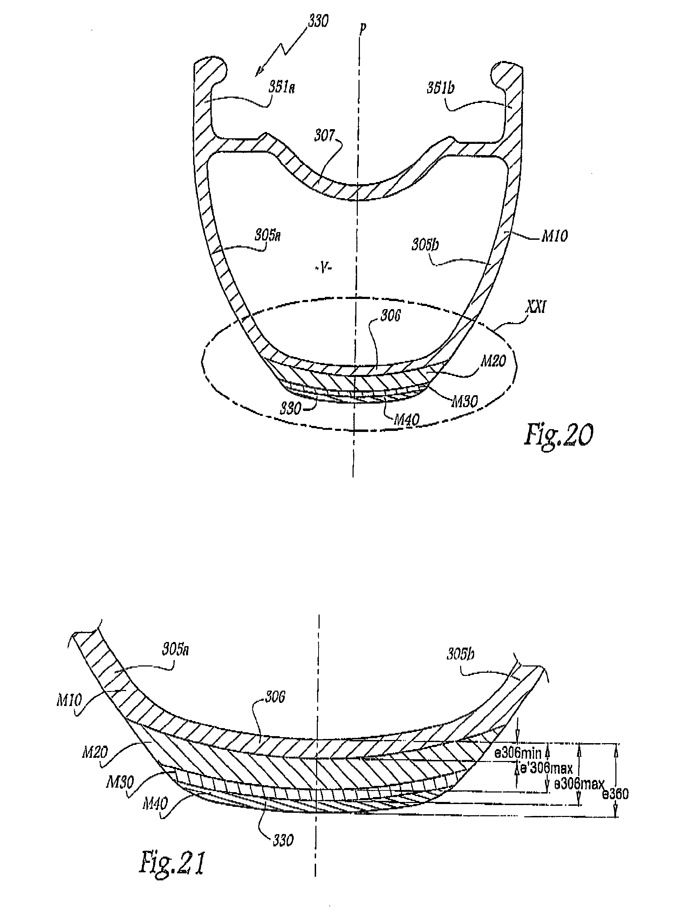

Aux figures 20 et 21, une zone hachurée M10 correspond à la section transversale de la jante 303 au niveau des zones Intermédiaires Z1 où l'épaisseur e306 du pont 306 est égale à une épaisseur minimale e306min.

La réunion de la zone hachurée M10 avec une zone hachurée M20 correspond à la section transversale de la jante 303, au niveau des zones de transmission Z3b1 où sont accrochés les rayons 4b1 faisant partie de la nappe 4b menée. On note e'306max, une épaisseur maximale mesurée au niveau des zones de transmission Z3b1, sur la réunion des zones M10 et M20. La zone hachurée M20 correspond ainsi à la surépaisseur de matière entre les zones intermédiaires Z1 et les zones de transmission Z3b1 et représente la différence entre l'épaisseur minimale e306min et l'épaisseur maximale e'306max.

La réunion des zones hachurées M10 et M20 avec une zone hachurée M30 correspond à la section transversale de la jante 303, au niveau des zones de transmission Z3a1 et Z3a2 où sont accrochés les rayons 4a1 et 4a2 faisant partie de la nappe 4a menante. On note e306max, une épaisseur maximale mesurée au niveau des zones de transmission Z3a1 et Z3a2, sur la réunion des zones M10, M20 et M30. La zone hachurée M30 correspond ainsi à la surépaisseur de matière entre les zones de transmission Z3b1 où sont accrochés les rayons 4b1 de la nappe 4b menée et les zones de transmission Z3a1 et Z3a2 où sont accrochés les rayons 4a1 et 4a2 de la nappe 4a menante. La zone hachurée M30 représente ainsi la différence entre l'épaisseur maximale e'306max et l'épaisseur maximale e306max.

La réunion des zones hachurées M10, M20, M30 avec une zone hachurée M40 correspond à la section transversale du profilé 330 à partir duquel est fabriquée la jante 303. On note e360, l'épaisseur du pont 306 du profilé 330. L'épaisseur e360 est supérieure à l'épaisseur maximale e306max.

Les épaisseurs e306 et e360 de la jante 303 et du profilé 330 peuvent être choisies égales aux épaisseurs e206 et e230 de la jante 203 et du profilé 230 conformes au troisième mode de réalisation.

La suite de la description concerne un cinquième mode de réalisation de l'invention, dans lequel on fabrique une jante non représentée à partir du profilé 330 de la figure 18.

Le procédé de fabrication de cette jante est globalement analogue à celui de la jante 303. Toutefois, dans l'étape d'usinage 1007, on usine sur toute la circonférence de la jante uniquement une zone médiane Z306 de la surface externe du pont 306. Ainsi, le pont 306 n'est pas usiné en intégralité. La zone médiane Z306 a une largeur transversale L306, mesurée perpendiculairement au plan médian P, supérieure ou égale à 4 mm. Ainsi, le pont 306 est usiné à proximité de toutes les zones d'accrochage des rayons 4a1, 4a2 et 4b1, aux endroits où les contraintes mécaniques sont les plus importantes. En usinant le pont 306 uniquement au niveau de la zone médiane Z6, on retarde l'apparition de fissures qui pourraient être initiées lorsque la jante est utilisée et subit des phénomènes de fatigue. Par exemple, on peut usiner uniquement les zones intermédiaires Z1, ou à la fois les zones intermédiaires Z1 et les zones de transition Z2.

Dans les procédés de fabrication de jantes connus de l'art antérieur, on cherchait systématiquement à réduire au maximum l'épaisseur du profilé. Au contraire, selon l'invention, on prévoit délibérément une épaisseur e60 du pont 6 du profilé relativement importante, supérieure à l'épaisseur maximale e6max du pont 6 considérée au terme de la fabrication de la jante 3 et sur la globalité de la circonférence de la jante 3, pour ensuite usiner toute la circonférence de la jante 3.

Dans le cadre de l'invention, les différents modes de réalisation décrits peuvent être combinés entre eux, au moins partiellement.

## Revendications

1. Procédé de fabrication d'une jante (3 ; 103 ; 203) pour roue (1) de cycle, la jante présentant, en coupe radiale, une forme en « U » avec deux flancs (5a, 5b ; 105a, 105b ; 205a, 205b) latéraux et un pont (6 ; 106 ; 206) qui relie les flancs et qui est situé en regard d'un axe de rotation (X) de la roue (1), la jante présentant une surface externe (S3 ; S103 ; S203) connexe qui est tournée vers l'extérieur de la jante et qui est définie à la fois par le pont (6 ; 106 ; 206) et par au moins une partie des flancs (5a, 5b ; 105a, 105b ; 205a, 205b), le procédé de fabrication comprenant :
- une étape d'extrusion (1001), dans laquelle on réalise par extrusion un profilé (30 ; 230) rectiligne qui comporte deux flancs (5a, 5b ; 105a, 105b ; 205a, 205b) latéraux et un pont (6 ; 106 ; 206) qui relie les flancs (5a, 5b ; 105a, 105b ; 205a, 205b) et qui est situé en regard d'un axe de rotation (X) de la roue (1), le profilé (30 ; 230) présentant une surface externe (S3 ; S103 ; S230) connexe qui est tournée vers l'extérieur de la jante (3 ; 103 ; 203) et qui est définie à la fois par le pont (6 ; 106 ; 203) et par au moins une partie des flancs (5a, 5b ; 105a, 105b ; 205a, 205b),
- une étape de cintrage (1003), dans laquelle on cintre le profilé (30 ; 230) pour former au moins un anneau,
- une étape d'assemblage (1004), dans laquelle on solidarise les extrémités de l'anneau formé à partir du profilé (30 ; 230),
- une étape de perçage (1006), dans laquelle on réalise des trous (41 ; 141) de fixation de rayons (4a1, 4a2, 4b1) de la roue (1) par perçage du pont (6 ; 106 ; 206),
**caractérisé en ce que** le procédé comporte en outre une étape d'usinage (1007), réalisée après l'étape de perçage (1006), dans laquelle sur au moins une zone médiane (Z306) de la surface externe (S6) du pont (6 ; 106 ; 206 ; 306), qui a une largeur transversale (L306) mesurée perpendiculairement au plan médian (P) supérieure à 4 mm, est usinée sur au moins 95% de la circonférence de la jante (3 ; 103 ; 203 ; 303) et **en ce que** l'étape d'usinage (1007) est réalisée au moyen d'une fraise (100) présentant un profil concave et permettant d'usiner simultanément, dans un plan radial (P4), le pont (6 ; 106 ; 206) et au moins une partie des flancs (5a, 5b ; 105a, 105b ; 205a, 205b).

2. Procédé selon la revendication 1, **caractérisé en ce que** sur au moins une partie de la circonférence de la jante (3 ; 103 ; 203), on usine, dans un plan radial (P4), l'intégralité de la surface externe (S3 ; S103 ; S203) de la jante (3 ; 103 ; 203).

3. Procédé selon la revendication 2, **caractérisée en ce que** la surface externe (S3) de la jante (3 ; 103 ; 203) comprend la totalité de la surface externe (S5a, S5b) des flancs (5a, 5b; 105a, 105b ; 205a, 205b).

4. Procédé selon l'une des revendications 1 à 3, **caractérisé en ce que** la jante (3 ; 103 ; 203) est divisée en plusieurs zones (Z1, Z2, Z3a1, Z3a2, Z3b1) qui fractionnent la circonférence de la jante (3 ; 103 ; 203) en secteurs angulaires, les zones (Z1, Z2, Z3a1, Z3a2, Z3b1) comprenant :
- des zones de transmission (Z3a1, Z3a2, Z3b1) situées autour des zones d'attache des rayons (4a1, 4a2, 4b1) de la roue (1) et
- des zones intermédiaires (Z1) situées entre les zones de transmission (Z3a1, Z3a2, Z3b1),
**en ce que**, au niveau des zones de transmission (Z3a1, Z3a2, Z3b1), l'épaisseur (e6 ; e106 ; e206) du pont (6 ; 106 ; 206), mesurée dans un plan médian (P) de la jante, est égale à une épaisseur maximale (e6max ; e106max ; e206max),
**en ce que**, au niveau des zones intermédiaires (Z1), l'épaisseur (e6 ; e106 ; e206) du pont (6 ; 106 ; 206), mesurée dans le plan médian (P) au terme de l'étape d'usinage (1007), est égale à une épaisseur minimale (e6min ; e106min ; e206min) inférieure à l'épaisseur maximale (e6max ; e106max ; e206max) et **en ce que** lors de l'étape d'usinage (1007), on usine la surface externe (S3 ; S103 ; S203) de la jante (3 ; 103 ; 203) au moins au niveau des zones intermédiaires (Z1).

5. Procédé selon la revendication 4, **caractérisée en ce que** les zones (Z1, Z2, Z3a1, Z3a2, Z3b1) comprennent en outre des zones de transition (Z2) situées chacune entre une zone de transmission (Z3a1, Z3a2, Z3b1) et une zone intermédiaire (Z1), **en ce qu'**au niveau des zones de transition (Z2), l'épaisseur (e6 ; e106 ; e206) du pont (6 ; 106 ; 206) est égale à une épaisseur intermédiaire (e6int ; e106int), comprise entre et variant progressivement entre l'épaisseur minimale (e6min ; e106min ; e206min) et l'épaisseur maximale (e6max ; e106max ; e206max) du pont (6 ; 106 ; 206) et **en ce que** lors de l'étape d'usinage (1007), on usine la surface externe (S3 ; S103 ; S203) de la jante (3 ; 103 ; 203) au moins au niveau des zones de transition (Z2).

6. Procédé selon l'une des revendications précédentes, **caractérisé en ce que** lors de l'étape d'usinage (1007), on usine l'intégralité de la surface externe (S3 ; S103 ; S203) de la jante (3 ; 103 ; 203) sur toute la circonférence de la jante (3 ; 103 ; 203).

7. Procédé selon l'une des revendications précédentes, **caractérisé en ce que** la surface externe (S3 ; S103 ; S203) comprend la totalité des flancs (5a, 5b ; 105a, 105b ; 205a, 205b) et **en ce que** dans l'étape d'usinage (1007), sur au moins une partie de la circonférence de la jante (3 ; 103 ; 203), on usine, dans un plan radial (P4), la totalité de la surface externe (S3 ; S103 ; S203) de la jante (3 ; 103 ; 203).

8. Procédé selon l'une des revendications précédentes, **caractérisé en ce qu'**au terme de l'étape d'extrusion (1001), un rayon de courbure (R0) du pont (6 ; 106 ; 206) du profilé (3 ; 230), mesuré dans le plan radial (P4) de la jante (3 ; 103 ; 203 ; 303), est supérieur à 20 mm et **en ce qu'**au terme de l'étape d'usinage (1007), un rayon de courbure (R6) du pont (6 ; 106 ; 206) de la jante est inférieur à 15 mm, de préférence inférieur à 10 mm.

9. Procédé selon l'une des revendications précédentes, **caractérisé en ce qu'**au terme de l'étape d'extrusion (1001), une épaisseur (e60 ; e260) du pont (6 ; 106 ; 206) du profilé (30 ; 230) est supérieure à 1,6 mm, de préférence supérieure à 1,9 mm.

10. Procédé selon l'une des revendications précédentes, **caractérisé en ce qu'**un rapport (A) ayant, comme dénominateur une épaisseur (e60 ; e260) du pont (6 ; 106 ; 206) du profilé (30 ; 230), mesurée au terme de l'étape d'extrusion (1001), et, comme numérateur, une épaisseur (e6 ; e106 ; e206) du pont (6 ; 106 ; 206) de la jante (3 ; 103 ; 203), mesurée au terme de l'étape d'usinage (1007), est inférieur à 90 %.

11. Procédé selon l'une des revendications précédentes, **caractérisé en ce que** lors de l'étape de perçage (1006), on réalise simultanément des trous (41 ; 141) et des cheminées (42 ; 142) de fixation des rayons (4a1, 4a2, 4b1) par fluoperçage du pont (6 ; 106 ; 206), sans découpage.

12. Procédé selon l'une des revendications précédentes, **caractérisé en ce qu'**une épaisseur minimale d'usinage (ε206min), égale à la différence entre, d'une part, l'épaisseur (e60 ; e260) du pont (6 ; 106 ; 206) du profilé (30 ; 230), mesurée au terme de l'étape d'extrusion (1001), et d'autre part, l'épaisseur minimale (e6min ; e206min) du pont (6 ; 106 ; 206) de la jante (3 ; 103 ; 203), mesurée au terme de l'étape d'usinage (1007) et considérée sur toute la circonférence de la jante (3 ; 103 ; 203), est supérieure à 0,1 mm, de préférence supérieure à 0,3 mm.

13. Procédé selon l'une des revendications précédentes, **caractérisé en ce que** lors de l'étape de perçage (1006), on réalise simultanément des trous (41 ; 141) et des cheminées (42 ; 142) de fixation des rayons (4a1, 4a2, 4b1) par fluoperçage du pont (6 ; 106 ; 206), sans découpage.

14. Jante (3 ; 103 ; 203) pour roue (1) de cycle, **caractérisée en ce qu'**elle est fabriquée au moyen d'un procédé conforme à l'une des revendications précédentes.

15. Jante (3 ; 103 ; 203) selon la revendication 14, **caractérisée en ce que** l'épaisseur maximale (e6max ; e106max ; e206max) du pont (6 ; 106 ; 206) est supérieure à 1,6 mm, de préférence supérieure à 2 mm.

16. Jante (3 ; 103 ; 203) selon l'une des revendications 14 ou 15, **caractérisée en ce que** l'épaisseur minimale (e6min ; e106min ; e206min) du pont (6 ; 106 ; 206) es inférieure à 0,8 mm, de préférence inférieure à 0,65 mm.

17. Jante (3 ; 103 ; 203) selon l'une des revendications 14 à 16, **caractérisée en ce que**, dans le plan radial (P4) de la jante (3 ; 103 ; 203), un rayon de courbure (R6) du pont (6 ; 106 ; 206) est inférieur à 15 mm, de préférence inférieur à 10 mm.

18. Jante (3 ; 103 ; 203) selon l'une des revendications 14 à 17, **caractérisée en ce que** le pont (6 ; 106 ; 206) comporte des cheminées cylindriques (42 ; 142) taraudées intérieurement pour la fixation de rayons (4a1, 4a2, 4b1) de la roue (1) et **en ce que** les cheminées (42 ; 142) sont formées d'une seule pièce avec la jante (3 ; 103 ; 203).

19. Jante (3 ; 103) fabriquée selon un procédé selon la revendication 4, **caractérisée en ce que** les flancs (5a, 5b ; 105a, 105b) définissent chacun une surface de freinage (S5a, S5b) plane, prévue pour coopérer avec un patin de freinage (81) et **en ce qu'**une hauteur (h5) d'au moins une surface de freinage (S5a, S5b), mesurée dans le plan radial (P4), est plus grande au niveau des zones de transmission (Z3a1, Z3a2, Z3b1) qu'au niveau des zones intermédiaires (Z1).

## Patentansprüche

1. Verfahren zur Herstellung einer Felge (3; 103; 203) für ein Rad (1) eines Fahrrads, wobei die Felge einen U-förmigen Radialschnitt mit zwei lateralen Flanken (5a, 5b; 105a, 105b; 205a, 205b) und einer Brücke (6; 106; 206), die die Flanken verbindet und die gegenüber einer Drehachse (X) des Rads (1) angeordnet ist, aufweist, wobei die Felge eine äußere Fläche (S3; S103; S203) aus einem Stück aufweist, die zum Felgenäußeren weist und die zugleich durch die Brücke (6; ; 106; 206) und durch mindestens einen Teil der Flanken (5a, 5b; 105a, 105b; 205a, 205b) definiert wird, wobei das Herstellungsverfahren Folgendes umfasst:
- einen Extrudierschritt (1001), bei dem durch Extrudieren ein geradliniges Profil (30; 230) ausgebildet wird, das zwei laterale Flanken (5a, 5b; 105a, 105b; 205a, 205b), und eine Brücke (6; 106; 206), die die Flanken (5a, 5b; 105a, 105b; 205a, 205b) verbindet und die gegenüber einer Drehachse (X) des Rads (1) anbeordnet ist, aufweist, wobei das Profil (30; 230) eine äußere Fläche (S3; S103; S230) aus einem Stück aufweist, die zum Äußeren der Felge (3; 103; 203) weist und die zugleich durch die Brücke (6; 106; 203) und durch mindestens einen Teil der Flanken (5a, 5b; 105a, 105b; 205a, 205b) definiert wird,
- einen Biegeschritt (1003), bei dem das Profil (30; 230) zur Bildung mindestens eines Rings gebogen wird,
- einen Zusammensetzschritt (1004), bei dem die Enden des aus dem Profil (30; 230) geformten Rings fest verbunden werden,
- einen Bohrschritt (1006), bei dem Löcher (41; 141) zur Befestigung von Speichen (4a1, 4a2, 4b1) des Rads (1) durch Bohren in die Brücke (6; 106; 206) ausgebildet werden,
**dadurch gekennzeichnet, dass** das Verfahren ferner einen Schritt (1007) der maschinellen Bearbeitung umfasst, der nach dem Bohrschritt (1006) durchgeführt wird, bei dem man mindestens einen mittleren Bereich (Z306) der äußeren Fläche (S6) der Brücke (6; 106; 206; 306), der eine senkrecht zur Mittelebene (P) gemessene Querbreite (L306) von mehr als 4 mm aufweist, über mindestens 95% des Umfangs der Felge (3; 103; 203; 303) maschinell bearbeitet und, dass der Schritt (1007) der maschinellen Bearbeitung mit einem Fräswerkzeug (100) durchgeführt wird, das ein konkaves Profil aufweist und in einer Radialebene (P4) eine gleichzeitige maschinelle Bearbeitung der Brücke (6; 106; 206) und mindestens eines Teils der Flanken (5a, 5b; 105a, 105b; 205a, 205b) gestattet.

2. Verfahren nach Anspruch 1, **dadurch gekennzeichnet, dass** auf mindestens einem Teil des Umfangs der Felge (3; 103; 203) in einer Radialebene (P4) die gesamte äußere Fläche (S3; S103; S203) der Felge (3; 103; 203) maschinell bearbeitet wird.

3. Verfahren nach Anspruch 2, **dadurch gekennzeichnet, dass** die äußere Fläche (S3) der Felge (3; 103; 203) die gesamte äußere Fläche (S5a, S5b) der Flanken (5a, 5b; 105a, 105b; 205a, 205b) umfasst.

4. Verfahren nach einem der Ansprüche 1 bis 3, **dadurch gekennzeichnet, dass** die Felge (3; 103; 203) in mehrere Bereiche (Z1, Z2, Z3a1, Z3a2, Z3b1) unterteilt ist, die den Umfang der Felge (3; 103; 203) in Winkelabschnitte teilen, wobei die Bereiche (Z1, Z2, Z3a1, Z3a2, Z3b1) Folgendes umfassen:
- Übertragungsbereiche (Z3a1, Z3a2, Z3b1), die sich um die Befestigungsbereiche für Speichen (4a1, 4a2, 4b1) des Rads (1) herum befinden, und
- Zwischenbereiche (Z1), die sich zwischen den Übertragungsbereichen (Z3a1, Z3a2, Z3b1) befinden,
dass die in einer Mittelebene (P) der Felge gemessene Dicke (e6; e106; e206) der Brücke (6; 106; 206) bei den Übertragungsbereichen (Z3a1, Z3a2, Z3b1) gleich einer maximalen Dicke (e6max; e106max; e206max) ist,
dass die am Ende des Schritts (1007) der maschinellen Bearbeitung in der Mittelebene (P) gemessene Dicke (e6; e106; e206) der Brücke (6; 106; 206) bei den Zwischenbereichen (Z1) gleich einer minimalen Dicke (e6min; e106min; e206min) ist, die kleiner als die maximale Dicke (e6max; e106max; e206max) ist, und dass die äußere Fläche (S3; S103; S203) der Felge (3; 103; 203) während des Schritts (1007) der maschinellen Bearbeitung zumindest bei den Zwischenbereichen (Z1) maschinell bearbeitet wird.

5. Verfahren nach Anspruch 4, **dadurch gekennzeichnet, dass** die Bereiche (Z1, Z2, Z3a1, Z3a2, Z3b1) ferner Übergangsbereiche (Z2) umfassen, die sich jeweils zwischen einem Übertragungsbereich (Z3a1, Z3a2, Z3b1) und einem Zwischenbereich (Z1) befinden, dass die Dicke (e6; e106; e206) der Brücke (6; 106; 206) bei den Übergangsbereichen (Z2) gleich einer Zwischendicke (e6int; e106int) ist, die zwischen der minimalen Dicke (e6min; e106min; e206min) und der maximalen Dicke (e6max; e106max; e206max) der Brücke (6; 106; 206) liegt und zwischen diesen schrittweise variiert, und dass die äußere Fläche (S3; S103; S203) der Felge (3; 103; 203) während des Schritts (1007) der maschinellen Bearbeitung zumindest bei den Übergangsbereichen (Z2) maschinell bearbeitet wird.

6. Verfahren nach einem der vorhergehenden Ansprüche, **dadurch gekennzeichnet, dass** die gesamte äußere Fläche (S3; S103; S203) der Felge (3; 103; 203) während des Schritts (1007) der maschinellen Bearbeitung über den gesamten Umfang der Felge (3; 103; 203) maschinell bearbeitet wird.

7. Verfahren nach einem der vorhergehenden Ansprüche, **dadurch gekennzeichnet, dass** die äußere Fläche (S3; S103; S203) alle Flanken (5a, 5b; 105a, 105b; 205a, 205b) umfasst und dass auf mindestens einem Teil des Umfangs der Felge (3; 103; 203) in einer Radialebene (P4) die gesamte äußere Fläche (S3; S103; S203) der Felge (3; 103; 203) maschinell bearbeitet wird.

8. Verfahren nach einem der vorhergehenden Anspruche, **dadurch gekennzeichnet, dass** am Ende des Extrudierschritts (1001) ein Krümmungsradius (R0) der Brücke (6; 106; 206) des Profils (30; 230) gemessen in der Radialebene (P4) der Felge (3; 103; 203; 303) mehr als 20 mm beträgt und dass am Ende des Schritts (1007) der maschinellen Bearbeitung ein Krümmungsradius (R6) der Brücke (6; 106; 206) der Felge weniger als 15 mm, vorzugsweise weniger als 10 mm, beträgt.

9. Verfahren nach einem der vorhergehenden Ansprüche, dadurch gekennzeichet, dass am Ende des Extrudierschritts (1001) eine Dicke (e60; e260) der Brücke (6; 106; 206) des Profils (30; 230) mehr als 1,6 mm, vorzugsweise mehr als 1,9 mm, beträgt.

10. Verfahren nach einem der vorhergehenden Ansprüche, **dadurch gekennzeichnet, dass** ein Verhältnis (A) mit einer am Ende des Extrudierschritts (1001) gemessenen Dicke (e60; e260) der Brücke (6; 106; 206) des Profils (30; 230) als Nenner und einer am Ende des Schritts (1007) der maschinellen Bearbeitung gemessenen Dicke (e6; e106; e206) der Brücke (6; 106; 206) der Felge (3; 103; 203) als Zähler weniger als 90 % beträgt.

11. Verfahren nach einem der vorhergehenden Ansprüche, **dadurch gekennzeichnet, dass** während des Bohrschritts (1006) gleichzeitig Löcher (41; 141) und Schächte (42; 142) zur Befestigung der Speichen (4a1, 4a2, 4b1) ohne Stanzen durch Fließbohren in die Brücke (6; 106; 206) ausgebildet werden.

12. Verfahren nach einem der vorhergehenden Ansprüche, **dadurch gekennzeichnet, dass** eine minimale Dicke der maschinellen Bearbeitung (e206min), die der Differenz zwischen einerseits der am Ende des Extrudierschritts (1001) gemessenen Dicke (e60; e260) der Brücke (6; 106; 206) des Profils (30; 230) und andererseits der am Ende des Schritts (1007) der maschinellen Bearbeitung gemessenen und über den gesamten Umfang der Felge (3; 103; 203) angewendeten minimalen Dicke (e6min, e206min) der Brücke (6; 106; 206) der Felge (3; 103; 203) entspricht, mehr als 0,1 mm, vorzugsweise mehr als 0,3 mm, beträgt.

13. Verfahren nach einem der vorhergehenden Ansprüche, **dadurch gekennzeichnet, dass** während des Bohrschritts (1006) gleichzeitig Löcher (41; 141) und Schächte (42; 142) zur Befestigung der Speichen (4a1, 4a2, 4b1) ohne Stanzen durch Fließbohren in die Brücke (6; 106; 206) ausgebildet werden.

14. Felge (3; 103; 203) für ein Rad (1) eines Fahrrads, **dadurch gekennzeichnet, dass** sie mit einem Verfahren nach einem der vorhergehenden Ansprüche hergestellt wird.

15. Felge (3; 103; 203) nach Anspruch 14, **dadurch gekennzeichnet, dass** die maximale Dicke (e6max; e106max; e206max) der Brücke (6; 106; 206) mehr als 1,6 mm, vorzugsweise mehr als 2 mm, beträgt.

16. Felge (3; 103; 203) nach einem der Ansprüche 14 oder 15, **dadurch gekennzeichnet, dass** die minimale Dicke (e6min; e106min; e206min) der Brücke (6; 106; 206) weniger als 0,8 mm, vorzugsweise weniger als 0,65 mm, beträgt.

17. Felge (3; 103; 203) nach einem der Ansprüche 14 bis 16, **dadurch gekennzeichnet, dass** ein Krümmungsradius (R6) der Brücke (6; 106; 206) in der Radialebene (P4) der Felge (3; 103; 203) weniger als 15 mm, vorzugsweise weniger als 10 mm, beträgt.

18. Felge (3; 103; 203) nach einem der Ansprüche 14 bis 17, **dadurch gekennzeichnet, dass** die Brücke (6; 106; 206) mit Innengewinde versehene zylindrische Schächte (42; 142) zur Befestigung von Speichen (4a1, 4a2, 4b1) des Rads (1) umfasst und dass die Schächte (42; 142) einstückig mit der Felge (3; 103; 203) gebildet sind.

19. Felge (3; 103), die gemäß einem Verfahren nach Anspruch 4 hergestellt wird, **dadurch gekennzeichnet, dass** die Flanken (5a, 5b; 105a, 105b) jeweils eine ebene Bremsfläche (S5a, S5b) definieren, die zum Zusammenwirken mit einem Bremsklotz (81) vorgesehen ist, und dass eine in der Radialebene (P4) gemessene Höhe (h5) mindestens einer Bremsfläche (S5a, S5b) bei den Übertragungsbereichen (Z3a1, Z3a2, Z3b1) größer ist als bei den Zwischenbereichen (Z1).

## Claims

1. Method of manufacturing a rim (3; 103; 203) for a bicycle wheel (1), the rim having, in radial cross section, a U-shape with two lateral flanks (5a, 5b; 105a, 105b; 205a, 205b) and a bridge (6; 106; 206) which connects the flanks and which is situated facing an axis of rotation (X) of the wheel (1), the rim having an auxiliary external surface (S3; S103; S203) which faces towards the outside of the rim and which is defined both by the bridge (6; 106; 206) and by at least part of the flanks (5a, 5b; 105a, 105b; 205a, 205b), the method of manufacture comprising:
- an extrusion step (1001), in which extrusion is used to make a straight profiled element (30; 230) which comprises two lateral flanks (5a, 5b; 105a, 105b; 205a, 205b) and a bridge (6; 106; 206) which connects the flanks (5a, 5b; 105a, 105b; 205a, 205b) and which is situated facing an axis of rotation (x) of the wheel (1), the profiled element (30; 230) having an auxiliary external surface (S3; S103; S230) which faces towards the outside of the rim (3; 103; 203) and which is defined both by the bridge (6; 106; 203) and at least part of the flanks (5a, 5b; 105a; 105b; 205a, 205b),
- a bending step (1003) in which the profiled element (30; 230) is bent to form at least an annulus,
- an assembly step (1004), in which the ends of the annulus formed from the profiled element (30; 230) are joined together,
- a piercing step (1006), in which holes (41; 141) are created for the fixing of spokes (4a1, 4a2, 4b1) of the wheel (1) by piercing the bridge (6; 106; 206),
**characterized in that** this method further comprises a machining step (1007), performed after the piercing step (1006), in which at least a median zone (Z306) of the external surface (S306) of the bridge (6; 106; 206; 306), which has a transverse width (L306) measured perpendicular to the mid-plane (P) greater than 4 mm, is machined over at least 95% of the circumference of the rim (3; 103; 203; 303), **in that** the machining step (1007) is performed using a milling cutter (100) that has a concave profile allowing the bridge (6; 106; 206) and at least part of the flanks (5a, 5b; 105a, 105b; 205a, 205b) to be machined simultaneously in a radial plane (P4).

2. Method according to Claim 1, **characterized in that** the entirety of the external surface (S3; S103; S203) of the rim (3; 103; 203) is machined in a radial plane (P4) over at least part of the circumference of the rim (3; 103; 203).

3. Method according to Claim 2, **characterized in that** the external surface (S3) of the rim (3; 103; 203) comprises the entirety of the external surface (S5a, S5b) of the flanks (5a, 5b; 105a, 105b; 205a, 205b).

4. Method according to one of Claims 1 to 3, **characterized in that** the rim (3; 103; 203) is divided into several zones (Z1, Z2, Z3a1, Z3a2, Z3b1) which split the circumference of the rim (3; 103; 203) into angular sectors, the zones (Z1, Z2, Z3a1, Z3a2, Z3b1) comprising:
- transmission zones (Z3a1, Z3a2, Z3b1) situated around the zones for attaching the spokes (4a1, 4a2, 4b1) of the wheel (1), and
- intermediate zones (Z1) situated between the transmission zones (Z3a1, Z3a2, Z3b1),
**in that**, at the transmission zones (Z3a1, Z3a2, Z3b1), the thickness (e6; e106; e206) of the bridge (6; 106; 206), measured in a mid-plane (P) of the rim, is equal to a maximum thickness (e6max; e106max; e206max),
**in that**, at the intermediate zones (Z1), the thickness (e6; e106; e206) of the bridge (6; 106; 206) measured in the mid-plane (P) at the end of the machining step (1007), is equal to a minimum thickness (e6min; e106min; e206min) less than the maximum thickness (e6max; e106max; e206max), and **in that** during the machining step (1007), the external surface (S3; S103; S203) of the rim (3; 103; 203) is machined at least in the region of the intermediate zones (Z1).

5. Method according to Claim 4, **characterized in that** the zones (Z1, Z2, Z3a1, Z3a2, Z3b1) further comprise transition zones (Z2), each one situated between a transmission zone (Z3a1, Z3a2, Z3b1) and an intermediate zone (Z1), **in that**, at the transition zones (Z2), the thickness (e6; e106; e206) of the bridge (6; 106; 206) is equal to an intermediate thickness (e6int; e106int) comprised between and varying progressively between the minimum thickness (e6min; e106min; e206min) and the maximum thickness (e6max; e106max; e206max) of the bridge (6; 106; 206), and **in that** during the machining step (1007), the external surface (S3; S103; S203) of the rim (3; 103; 203) is machined at least in the region of the transition zones (Z2).

6. Method according to one of the preceding claims, **characterized in that** during the machining step (10/7) the entirety of the external surface (S3; S103; S203) of the rim (3; 103; 203) is machined over the entire circumference of the rim (3; 103; 203).

7. Method according to one of the preceding claims, **characterized in that** the external surface (S3; S103; S203) comprises the entirety of the flanks (5a, 5b; 105a, 105b; 205a, 205b), and **in that** in the machining step (1007), the entirety of the external surface (S3; S103; S203) of the rim (3; 103; 203) is machined, in a radial plane (P4), over at least part of the circumference of the rim (3; 103; 203).

8. Method according to one of the preceding claims, **characterized in that** at the end of the extrusion step (1001), a radius of curvature (R0) of the bridge (6; 106; 206) of the profiled element (30; 230), measured in the radial plane (P4) of the rim (3; 103; 203; 303), is greater than 20 mm, and **in that** at the end of the machining step (1007), a radius of curvature (R6) of the bridge (6; 106; 206) of the rim is less than 15 mm, preferably less than 10 mm.

9. Method according to one of the preceding claims, **characterized in that** at the end of the extrusion step (1001), a thickness (e60; e260) of the bridge (6; 106; 206) of the profiled element (30; 230) is greater than 1.6 mm, preferably greater than 1.9 mm.

10. Method according to one of the preceding claims, **characterized in that** a ratio (A), having as its denominator, a thickness (e60; e260) of the bridge (6; 106; 206) of the profiled element (30; 230), measured at the end of the extrusion step (1001) and, as its numerator, a thickness (e6; e106; e206) of the bridge (6; 106; 206) of the rim (3; 103; 203), measured at the end of the machining step (1007), is less than 90%.

11. Method according to one of the preceding claims, **characterized in that** during the piercing step (1006), holes (41; 141) and sleeves (42; 142) for fixing the spokes (4a1, 4a2, 4b1) are produced simultaneously by flow-drilling the bridge (6; 106; 206), without cutting.

12. Method according to one of the preceding claims, **characterized in that** a minimum machining thickness (ε206min), equal to the difference between, on the one hand, the thickness (e60; e260) of the bridge (6; 106; 206) of the profiled element (30; 230), measured at the end of the extrusion step (1001) and, on the other hand, the minimum thickness (e6min, e206min) of the bridge (6; 106; 206) of the rim (3; 103; 203), measured at the end of the machining step (1007) and considered over the entire circumference of the rim (3; 103; 203), is greater than 0.1 mm, preferably greater than 0.3 mm.

13. Method according to one of the preceding claims, **characterized in that** during the piercing step (1006), holes (41; 141) and sleeves (42; 142) for fixing the spokes (4a1, 4a2, 4b1) are produced simultaneously by flow-drilling the bridge (6; 106; 206) without cutting.

14. Rim (3; 103; 203) for a bicycle wheel (1), **characterized in that** it is manufactured by means of a method according to one of the preceding claims.

15. Rim (3; 103; 203) according to Claim 14, **characterized in that** the maximum thickness (e6max; e106max; e206max) of the bridge (6; 106; 206) is greater than 1.6 mm, preferably greater than 2 mm.

16. Rim (3; 103; 203) according to either of Claims 14 and 15, **characterized in that** the minimum thickness (e6min; e106min; e206min) of the bridge (6; 106; 206) is less than 0.8 mm, preferably less than 0.65 mm.

17. Rim (3; 103; 203) according to one of Claims 14 to 16, **characterized in that**, in the radial plane (P4) of the rim (3; 103; 203), a radius of curvature (R6) of the bridge (6; 106; 206) is less than 15 mm, preferably less than 10 mm.

18. Rim (3; 103; 203) according to one of Claims 14 to 17, **characterized in that** the bridge (6; 106; 206) comprises internally tapped cylindrical sleeves (42; 142) for attaching spokes (4a1, 4a2, 4b1) of the wheel (1), and **in that** the sleeves (42; 142) are formed integrally with the rim (3; 103; 203).

19. Rim (3; 103) manufactured by a method according to Claim 4, **characterized in that** the flanks (5a, 5b; 105a, 105b) each define a planar braking surface (S5a, S5b) intended to co-operate with a brake pad (81), and **in that** a height (h5) of at least one braking surface (S5a, S5b) measured in the radial plane (P4), is greater at the transmission zones (Z3a1, Z3a2, Z3b1) than at the intermediate zones (Z1).
